Europäisches Patentamt

European Patent Office

Office européen des brevets

(11) Veröffentlichungsnummer: **0 249 919**

**A2**

## (12) EUROPÄISCHE PATENTANMELDUNG

(21) Anmeldenummer: 87108585.8

(51) Int. Cl.⁴: **F24J 2/26**

(22) Anmeldetag: 15.06.87

(30) Priorität: 16.06.86 DE 3620285
26.11.86 DE 3640376

(43) Veröffentlichungstag der Anmeldung:
**23.12.87 Patentblatt 87/52**

(84) Benannte Vertragsstaaten:
**AT BE CH DE ES FR GB IT LI NL SE**

(71) Anmelder: **Weikert, Dietrich**
**Goethestrasse 44**
**D-3210 Elze 1(DE)**

(72) Erfinder: **Weikert, Dietrich**
**Goethestrasse 44**
**D-3210 Elze 1(DE)**

(74) Vertreter: **Dipl.-Ing. Schwabe, Dr. Dr.**
**Sandmair, Dr. Marx**
**Stuntzstrasse 16**
**D-8000 München 80(DE)**

(54) **Jalousieanordnung.**

(57) Bei einer Jalousieanordnung ist mindestens die dem einfallenden Sonnenlicht zugewandte Oberfläche jeder der Lamellen zum Absorbieren des Sonnenlichtes eingerichtet, und jede der Lamellen ist von einem Wärmeübertragungsmedium durchströmbar.

Durch Durchleiten eines Kühlmediums, Heizmediums oder für den Kollektorbetrieb geeignet temperierten Mediums durch die Lamellen kann die erfindungsgemäße Jalousieanordnung als Heizung, Kühlung oder Sonnenenergiekollektor verwendet werden.

Die besonders dünnwandige Metallamelle ist aus einem in der Schwenkachse der Lamelle gelegenen Rohr und einem an diesem angelegten Lamellenflügel gebildet. Die Lagerungen und Endleitungen dieser Lamellenanordnungen sind in Modulbauweise aus Einzelteilen zusammensteckbar gebildet, um einem Bastler oder Laien den Einbau der Jalousieanordnung ohne Mühe zu ermöglichen.

Fig. 1

## Jalousieanordnung

Die Erfindung betrifft eine Jalousieanordnung gemäß dem Oberbegriff des Anspruchs 1. Ferner betrifft die Erfindung auch eine Dachfläche gemäß dem Anspruch 32, einen Bausatz gemäß dem Anspruch 34 und ein Gebäude gemäß dem Anspruch 35.

Die Erfindung geht aus von dem folgenden Stand der Technik:

1. Deutsches Patent 30 50 717
2. Deutsche Offenlegungsschrift 32 22 884
3. Deutsche Offenlegungsschrift 26 24 646
4. Deutsches Gebrauchsmuster 76 38 890
5. Deutsche Offenlegungsschrift 33 37 436
6. Deutsche Offenlegungsschrift 27 53 860
7. Deutsches Gebrauchsmuster 77 06 578.

Diese Druckschriften werden nachfolgend kurz erläutert:

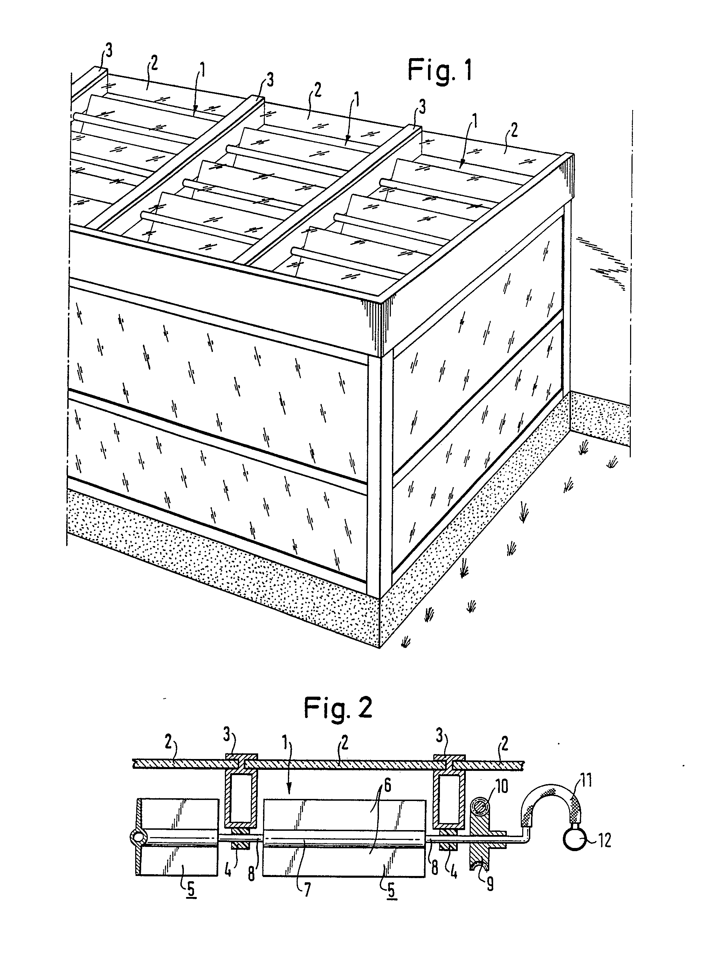

Die Druckschrift 1 (DE-PS 30 50 717) betrifft einen Zaun zum Absorbieren von Sonnenenergie, mit einzelnen, von einem Wärmetauschermedium durchströmten Wärmetauscherprofilen, die miteinander fluchtend sowie parallel zueinander angeordnet sind. Zur Halterung dieser Profile sind Zaunpfosten vorgesehen, an welchen eine Aufhängung befestigt ist, in die der zwei miteinander fluchtende Profile verbindende Rohrstutzen eingehängt ist. Im übrigen sind Anschlagbleche vorgesehen, die am Zaunpfosten befestigt sind und unmittelbar gegen die Profile anliegen (Fig. 2).

Über den inneren Aufbau der Wärmetauscherprofile ist der Druckschrift nichts entnehmbar; ganz offensichtlich sind diese im übrigen unverschwenkbar.

Der in der Aufhängung des Zaunpfostens befestigte Rohrverbinder ist "elastisch".

Die Druckschrift 2 (DE-OS 32 22 884) betrifft eine Anordnung aus um 180° schwenkbaren Hohllamellen, die parallel zueinander angeordnet sind und deren gesamter Hohlraum von einem Wärmeaustauschmedium durchflossen ist. Die eine Oberfläche der Hohllamellen ist mit Isoliermaterial beschichtet. Die Hohllamellen sind in Innenräumen von Gebäuden angebracht.

Durch das Verschwenken der jalousieartigen Hohllamellen kann der Lichteinfall in das Gebäude reguliert werden; ferner können die nicht mit Isoliermaterial beschichteten Flächen der Lamellen so ausgerichtet werden, daß sie im wesentlichen quer zum einfallenden Sonnenlicht stehen, um dieses möglichst gut zu nutzen. Gleichzeitig verhindert das raumwärts gelegene Isoliermaterial die Abstrahlung von Wärme in den Raum hinein.

Die Lamellen können so verschwenkt werden, daß die mit Isoliermaterial beschichteten Oberflächen nach außen weisen. Hierdurch wird im Winter die Wärmeabstrahlung aus dem Raum verhindert; schließlich ist es in der Druckschrift auch offenbart, daß in dieser Stellung die Hohllamellen durch ein Heizmedium durchströmt werden.

Die Druckschrift 3 (DE-OS 26 24 646) betrifft eine Jalousieanordnung aus schwenkbaren Hohllamellen, die bevorzugt aus verschweißten Kunststoffschalen bestehen und deren gesamter Innenraum von Wärmeaustauschmedium durchströmt wird. Wie das Ausführungsbeispiel zeigt, sind diese Lamellen im Inneren eines Gebäudes angeordnet.

Die Außenschicht der Lamellen ist schwarz, die Innenschicht dagegen entweder beliebig eingefärbt (Figurenbeschreibung) oder hell gefärbt (Anspruch 1).

Die Lamellen enden beiderseits im einem Rohrstutzen, wobei die Rohrstutzen zweier benachbarter Lamellen jeweils in einen hohlen Haltestutzen unter Abdichtung durch Dichtungsringe eingesteckt sind, welcher seinerseits an einem gebäudefesten Profil ansteckbar ist. Die Montage außerhalb von Gebäuden ist ebenfalls offenbart.

Die Steckverbindung der Lamellen nimmt durch Wärmeänderungen bedingte Längenänderungen der Lamellen auf, benutzt hierzu aber einen gleitenden Dichtungsring, der dem Verschleiß unterworfen ist und undicht werden kann. Im übrigen wird dieser Dichtungsring durch das hohe Gewicht der horizontal verlegten Lamellen einseitig belastet; dieses Gewicht ist sehr beträchtlich, da der gesamte Hohlraum der Lamellen mit Wasser gefüllt ist.

Die Druckschrift 4 (DE-GM 76 38 890) betrifft eine jalousieartige Anordnung von Schwenklamellen, welche sich insgesamt horizontal erstreckt. Diese Schwenklamellen bestehen aus einem Gehäuse, dessen Sonnenseite von einer Glasplatte und dessen von der Sonne abgewandte Seite von einer Isolierwand gebildet ist; zwischen Glasplatte und Isolierwand ist eine Leitung für Wärmeaustauschmedium schlangenartig verlegt. Diese Leitung durchdringt die beiderseits der Lamellen angeordneten, hohlen Lagerzapfen und ist unmittelbar an eine gemeinsame Vor-bzw. Rücklaufleitung angeschlossen. Beim Verschwenken der Lamelle wird die den Lagerzapfen durchdringende Leitung verdrillt.

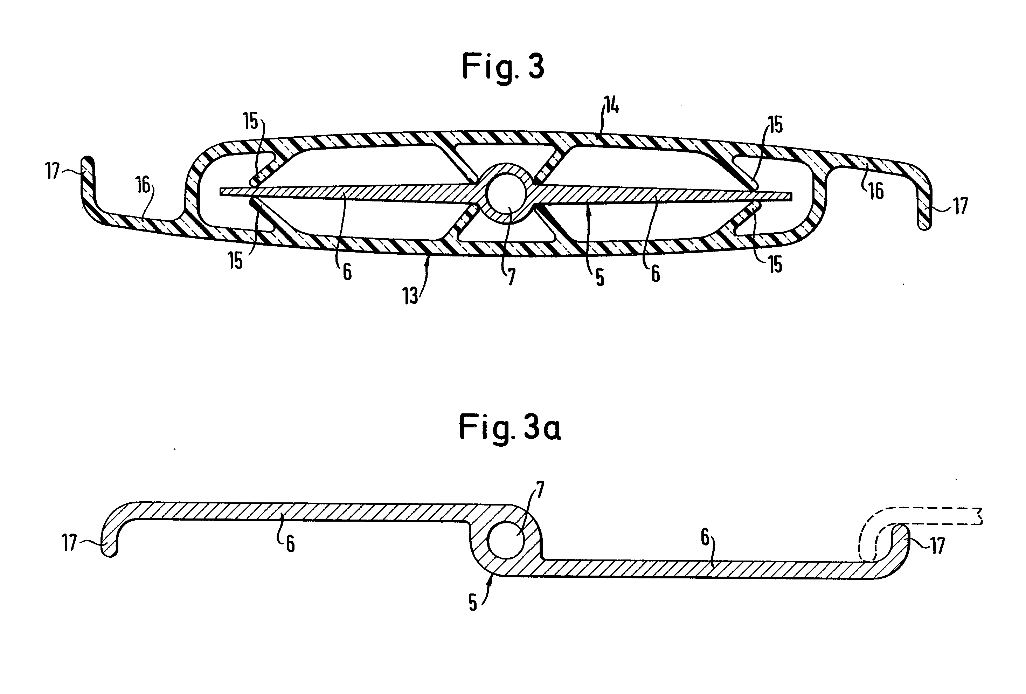

Zwar ist der eigentliche Innenraum der Lamelle nicht insgesamt mit Wärmeaustauschmedium gefüllt, doch zeigt die Fig. 3, daß durch eng aneinanderliegende Schlangenlinien der Leitung der Versuch unternommen ist, doch eine möglichst große Menge an Wärmeaustauschmedium in einer Lamelle unterzubringen. Das Gewicht dieser Lamelle ist entsprechend hoch.

Ferner kann es im Inneren der Lamelle zu einer gewissen "Gewächshauswirkung" kommen, da der Innenraum zur einen Seite hin isoliert und zur anderen Seite hin durch eine Glasplatte abgeschlossen ist.

Die Druckschrift 5 (DE-OS 33 37 436) betrifft eine im wesentlichen in einer horizontalen Ebene angeordnete Überdachung, die aus jalousieartig parallel zueinander angeordneten Schwenklamellen gebildet ist. Diese Schwenklamellen sind jedoch nich für den Wärmeaustausch eingerichtet.

Die Lamellen sind nicht nur verschwenkbar, sondern auch quer zu ihrer Schwenkrichtung verschieblich und ineinander schachtelbar.

Um eine möglichst geschlossene Dachfläche bilden zu können, hintergreifen einander die Lamellen in ihrer horizontalen Schwenklage, wobei die eine Längskante der Lamellen als Regenrinne und die andere als die Regenrinne der benachbarten Lamelle übergreifende Ausstülpung ausgebildet ist.

Da diese Überdachung keine Einrichtung zum Wärmeaustausch aufweist, ist der Gegenstand dieser Druckschrift nach diesseitiger Überzeugung gattungsfern. Im übrigen ist wegen des komplizierten Antriebes, der die Lamellen sowohl verschwenkt als auch verschiebt, die Übertragung auf von Wärmeaustauscherflüssigkeit durchströmte Schwenklamellen nicht denkbar, da nicht erkennbar ist, auf welche Weise die einzelnen Lamellen ohne Behinderung ihrer Bewegung an einen Umlauf für Wärmeaustauschmedium angeschlossen werden könnten.

Die Druckschrift 6 (DE-OS 27 53 860) betrifft nebeneinander angebrachte, lotrechte Lamellen, die sowohl eine Sonnenblende als auch einen Sonnenenergiekollektor bilden. Hierbei ist in einem länglichen Kunststoff-Hohlkörper mit im wesentlichen linsenförmigem Querschnitt ein leistenförmiger Sonnenenergiekollektor angebracht, der aus schwarzem Material besteht, hohl ist und sich über die gesamte Länge und Breite der Lamelle erstreckt. Die dem Sonnenlicht zugewandte Fläche der Lamelle ist transparent und kann zum Erzielen des "Treibhauseffektes" wie ein Doppelfenster doppelwandig ausgeführt sein.

Das Innere des Sonnenenergiekollektors ist zwar in einzelne Längskammern unterteilt, diese sind jedoch alle von Wärmeaustauschflüssigkeit durchströmt.

Wie aus Fig. 2 ersichtlich, lassen die Schwenklagerungen der einzelnen Lamellen keine Lageänderung in deren Längsrichtung zu. Wie aus Fig. 1 ersichtlich ist, sollen sich die Lamellen im wesentlichen über die gesamte Länge eines Gebäudes erstrecken, so daß ihr Gewicht außerordentlich hoch ist.

Die Druckschrift 7 (DE-GM 77 06 578) betrifft ein sogenanntes "Klimadach" aus Aluminium-Strangpreßteilen, die lattenartig ausgebildet sind und horizontal mit ihren Längsrändern einander übergreifend auf einer geneigten Dachfläche so anzubringen sind, daß Regenwasser über die Strangpreßteile und längs dieser abfließt.

Zum Halten und Verspannen dieser Strangpreßteile sind zwischen diesen horizontal verlaufende Rohre angeordnet, die von den benachbarten Strangpreßteilen teilweise umschlossen werden, wobei eine möglichst enge Anlage angestrebt wird, aber keine Verschweißung, Verlötung oder dergleichen vorgenommen ist. Diese Rohre können vom Wärmeaustauschmedium durchflossen sein. Im übrigen ist die gesamte Anlage ortsfest, d.h., die Strangpreßteile sind fest auf dem Dach angebracht und können unter keinen Umständen verschwenkt werden.

Im übrigen weisen nach bevorzugten Maßangaben die Strangpreßteile eine Dicke von weniger als 2 mm und eine Breite von etwa 30 cm auf. Die Strangpreßteile können auch aus Kunststoff bestehen.

Zieht man diese Abmessungen in Betracht, und unterstellt man, daß ein solches, eine Dachplanke bildendes Strangpreßteil von der Sonne erwärmt wird, dann ist ganz klar erkennbar, daß der größte Teil der aufgefangenen Wärmemenge durch Abstrahlung und Konvektion an die Umgebung abgegeben wird, denn infolge der geringen Wandstärke und der im Vergleich zu dieser außerordentlich hohen Breite ist der Wärmetransport quer zu den Strangpreßteilen und in diesen zu den Halterohren hin außerordentlich gering.

Außerdem ist es fraglich, ob diese Druckschrift zu einer Wärmeaustauscheranordnung, die aus verschwenkbaren, vom Wärmeaustauschmedium durchflossenen La mellen besteht, noch gattungsnahe ist.

Zusammenfassung: wenn man von der gattungsfernen Druckschrift 5 und der Druckschrift 7 absieht, erkennt man im Stand der Technik das übereinstimmende Bemühen, möglichst kurze Wärmeleitwege zwischen der die Sonnenenergie auffangenden Fläche und dem Wärmeaustauschmedium vorzusehen und bleichzeitig dafür zu sorgen, daß eine möglichst große Menge an Wärmeaustauschmedium in den Schwenklamellen enthalten ist, vermutlich, um trotz eines noch vernünftigen Durchsatzes eine insgesamt hohe Verweilzeit des Wärmeaustauschmediums und somit auch dessen nennenswerte Erwärmung zu erreichen. Um einen Ausgleich zu dem zwangsläufig hohen Gewicht zu erreichen, sind die meisten Ausführung aus Kunststoff.

Insbesondere wegen des hohen Gewichts sind somit die bekannten Anordnungen nicht generell zur Nachrüstung an einem Gebäude einsetzbar, da das hohe Gewicht der Jalousieanordnungen besonderer struktureller Vorkehrungen bedarf, die bei bereits vorhandenen Gebäuden in der Regel wohl nicht gegeben sein dürften.

Außerdem ergibt sich der weitere Nachteil, daß das hohe Gewicht der Lamellen die Abdichtung in den Schwenklagerungen erschwert. Außerdem weist der von allen Lamellen gemeinsam gebildete Wärmeaustauscher eine sehr hohe, vom Wasser bzw. Wärmeaustauschmedium benetzte Wandfläche auf, wodurch ganz zwangsläufig die Gefahr von Leckagen und Undichtigkeitsstellen erhöht wird. Dies gilt besonders bei der Verwendung von Kunststoff, der - der Sonneneinstrahlung ausgesetzt - durchaus nicht in jedem Falle alterungsbeständig ist. Das Abdichten undicht gewordener Lamellen oder Lagerungen, die oft in - schwerzugänglicher Höhe angeordnet sind, ist aufwendig. Der Austritt von Wärmeaustauschflüssigkeit kann überdies, wenn er nicht rechtzeitig bemerkt wird, zu beträchtlichen Gebäudeschäden führen. Alle diese Nachteile müssen beim Bau eines Gebäudes von vorneherein berücksichtigt werden; eine Umrüstung bereits vorhandener Gebäude ist nicht möglich.

Außerdem sind wegen der Witterungsempfindlichkeit mancher Kunststoffe einige der Lamellen aus dem Stand der Technik nicht außerhalb von Gebäuden einsetzbar.

Ausgehend von diesem Stand der Technik liegt der Erfindung die Aufgabe zugrunde, die etwa durch die Druckschrift 3 bekannte Anordnung dahingehend weiterzubilden, daß sie universeller eingesetzt werden kann.

Diese Aufgabe wird durch die Merkmale des Anspruchs 1 gelöst, wobei die obengenannten Nachteile aus dem Stand der Technik vermieden sind.

Wesentliches Kernmerkmal der erfindungsgemäßen Lamellen ist die Verwendung nur eines einzigen, mittig durchgehenden Mittelrohres mit verhältnismäßig geringem Querschnitt als Strömungskanal für das Wärmeaustauschmedium. Dieses Rohr erstreckt sich bei weitem nicht über die volle Höchstbreite der Lamellen, wie dies sonst beim Stand der Technik und in der Wirkung auch beim Gegenstand der Druckschrift 4 der Fall ist. Beiderseits des Mittelrohres ist mit diesem ein Lamellenflügel verbunden, dessen Breite und Dicke so bemessen ist, daß in seinem Inneren eine ausreichende Wärmeleitung zum Mittelrohr hin stattfindet.

Hierbei erwärmt sich zwar die Oberfläche der erfindungsgemäßen Lamelle stärker als z.B. jene der gattungsbildenden Lamelle, doch sind die durch Wärmeabgabe an die Umgebung erlittenen Wärmeverluste verhältnismäßig gering; wie Versuche ergeben haben, liegt bei gleichem Durchsatz an Wärmeaustauschmedium die Temperatur bei der erfindungsgemäßen Lamelle nur wenig unter jener einer gleich großen Lamelle aus dem Stand der Technik. Dafür ist aber die erfindungsgemäße Lamelle außerordentlich stabil, wegen der mittigen Anordnung des Rohres leicht abdichtbar und weist einen durchströmten Innenraum mit nur geringer Oberfläche auf, so daß die Gefahr von Undichtigkeiten stark verringert ist.

Wegen des geringen Inhalts an Wärmeaustauschmedium ist das Gesamtgewicht der erfindungsgemäßen Lamellenanordnung sehr gering, verglichen mit bekannten Anordnungen, so daß keine besonderen baulichen Maßnahmen zur Aufnahme des Gewichts getroffen werden müssen.

Da im Gegensatz zur bekannten, gattungsbildenden Lamelle am Ende und in der Mitte der erfindungsgemäßen Lamelle jeweils der unverändert gleiche Querschnitt vorliegt, ist es auch nicht erforderlich, für vor gegebene Einbauverhältnisse spezielle Lamellen anzufertigen, sondern es reicht aus, von einem vorhandenen Material lediglich Lamellen der erforderlichen Länge zuzuschneiden.

Die Verbindung zweier miteinander fluchtender Lamellen an einer Lagestelle kann durch Einpressen oder Einkleben eines nachgiebigen Rohrstutzens geschehen, da dessen Belastung wegen des geringen Gewichts der Lamellen verhältnismäßig gering ist.

Insgesamt weicht die Erfindung von Grundprinzip aus dem Stand der Technik ab, wobei die Wirkungsangabe in der Druckschrift 7 zwar angedeutet ist, aber erkennbar zu einer nur außerordentlich geringen Energieausbeute führt. Eine Weiterbildung im Sinne der Erfindung war daher dem Fachmann nicht möglich.

Erfindungsgemäß besteht die Lösung darin, daß die dem Sonnenlicht zuwendbare Oberfläche der einzelnen Lamellen nicht, wie bisher, das Sonnenlicht reflektierend, sondern dieses absorbierend ausgebildet sind. Die Sonnenlichteinstrahlung wird somit von den Lamellen nicht reflektiert, sondern im Gegenteil aufgenommen. Zur Ableitung dieser Wärmeenergie weist jede der Lamellen einen ein- oder mehrzweigigen Strömungsmittelkanal auf, der in wärmeleitender Verbindung mit der das Sonnenlicht absorbierenden Fläche der Lamellen steht.

Vorzugsweise wird die Lamelle einestückig als beispielsweise stranggepreßtes Profil ausgebildet. Es ist aber ebenfalls bevorzugt, die Lamelle zweistückig auszubilden, mit einem Mittelrohr, mit welchem ein Aluminium-Blechband verbunden ist, welches das Mittelrohr mindestens um einen Teil umschlingt, wärmeleitend mit diesem verbunden ist und mit einem abstehenden Seitenstreifen den eigentlichen Lamellenflügel oder die Lamellenflügel bildet.

Zur wärmeleitenden Verbindung kann der Blechstreifen mit dem Rohr verschweißt oder wärmeleitend verklebt sein. Gemäß einer bevorzugten Ausgestaltung der Erfindung umschlingt der Blechstreifen das Mittelrohr um mehr als 180°, so daß das Mittelrohr seinerseits formschlüssig vom Blechstreifen gehalten wird. Der Blechstreifen ist hierbei entweder vorgeformt und in Längsrichtung auf das Mittelrohr ausgeschoben oder in dessen Radialrichtung auf das Mittelrohr aufgeklemmt oder ist um das Mittelrohr herumgebogen. In jedem Fall liegt der Blechstreifen spielfrei und somit flächig gegen das Mittelrohr an und ist vorzugsweise durch eine Vorspannung gegen dieses angedrückt. Hierbei bildet sich eine ausreichende wärmeleitende Verbindung zwischen dem Blechstreifen und dem Mittelrohr, welche sich auch nach längerer Gebrauchszeit nicht verschlechtert, weil wegen der engen Anlage von Mittelrohr und Blechstreifen das Eindringen von Schmutz in den Berührungsbereich verhindert ist, die Korrosion durch Luft-und Feuchtigkeitseinflüsse wegen der Verwendung von Aluminium ausgeschlossen ist, welches eine dichte, schützende Oxydschicht aufweist, und auch die Korrosion durch elektrische Wirkung ausgeschlossen ist, weil das Mittelrohr und der Blechstreifen aus dem gleichen Material gebildet sind und somit kein elektrisches Element bilden können.

Soweit der Blechstreifen nur einen Lamellenflügel bildet, kann er das Mittelrohr, dessen Mittelachse mit der Schwenk-Mittelachse der Lamelle zusammenfällt, ganz umschließen. Bevorzugt bildet der Blechstreifen jedoch zwei Lamellenflügel, die beiderseits des Mittelrohres in einer gemeinsamen Ebene liegen, welche jedoch außerhalb der Mittelachse des Mittelrohres leigt. Hierbei wird das Mittelrohr vom Blechstreifen bevorzugt über einen Bereich von etwa 270° hinweg umschlungen.

Jeder der Strömungsmittelkanäle der Lamellen der erfindungsgemäßen Jalousieanordnung ist hierbei an einen Strömungsmittelkreislauf angeschlossen.

Die erfindungsgemäße Jalousieanordnung kann somit bereits für sich alleine einen Sonnenenergie-Kollektor bilden, wobei die einzelnen Lamellen mit ihrer das Sonnenlicht absorbierenden Fläche stets möglichst quer auf das einfallende Sonnenlicht ausgerichtet werden können, um dieses zu nutzen.

Soweit, wie etwa in Mitteleuropa, die Sonne nie den Zenit erreicht, sind stets ausreichende Zwischenräume zwischen den Lamellen gebildet, um das Tageslicht durchzulassen. Somit ist es möglich, die erfindungsgemäße Jalousieanordnung außerhalb einer lichtdurchlässigen Dach-oder Wandfläche eines Gebäudes anzubringen. Hierbei wird der Innenraum des Gebäudes vor dem einfallenden Sonnenlicht abgeschirmt, während gleichzeitig das Tageslicht Zutritt in das Gebäude findet.

Es wäre grundsätzlich möglich, den· Ein-und Auslaß des Strömungsmittelkanales einer jeden Lamelle über einen Schlauch an den Strömungsmittelkreislauf oder an Verbindungsleitungen anzuschließen. Gemäß einer bevorzugten Ausgestaltung der Erfindung sind jedoch die zur Drehlagerung einer jeden Lamelle dienenden Schwenkzapfen hohl ausgebildet und bilden die Anschlußstutzen der Strömungsmittelkanalanordnung der entsprechenden Lamelle. Hierbei ist bevorzugt ein einziger, mittig durchgehender Strömungsmittelkanal vorgesehen.

Ein besonderer Vorteil der Erfindung bei Anbringung der Jalousieanordnung im Freien liegt darin, daß die das Sonnenlicht absorbierende Fläche in ihrer Wirkung durch Verschmutzung kaum beeinträchtigt wird, im Gegensatz zu einer das Sonnenlicht reflektierenden Fläche. Die erfindungsgemäße Jalousieanordnung ist somit weitgehend wartungsfrei.

Als bevorzugtes Strömungsmittel wird Brauchwasser verwendet. Um eine besonders starke Erwärmung dieses Wassers zu erreichen, ist es vorteilhaft, möglichst einige Lamellen hintereinander zu schalten.

Gemäß einer Ausgestaltung der Erfindung liegt aber dann, wenn die erfindungsgemäße Jalousieanordnung im Innenraum eines Gebäudes der eingangs genannten Art angebracht werden soll, ein besonderer Vorteil der Erfindung darin, daß die Lamellen einzeln oder allenfalls gruppenweise parallel an den Strömungsmittelkreislauf angeschlossen sind. Somit erwärmen sich selbst bei starkem Sonnenlichteinfall, wie er etwa im Hochsommer gegeben ist, die einzelnen Lamellen nur verhältnismäßig unbedeutend, da die absorbierte Wärme durch das Strömungsmittel rasch über den Strömungsmittelkreislauf abgeführt wird.

Ein ganz besonderer Vorteil der Erfindung liegt nun darin, daß -je nach Jahreszeit bzw. Witterungsverhältnissen - wahlweise ein kaltes oder warmes Strömungsmittel durch die Lamellen geleitet wird: im Sommer bei extrem hoher Wärmeeinstrahlung kann z.B. sehr kaltes Wasser durch die Lamellen gepumpt werden, so daß die mittlere Oberflächentemperatur der gesamten Lamellen trotz der starken Sonneneinstrahlung noch unter der Umgebungstemperatur liegt. Es ist somit möglich, mit der erfindungsgemäßen Jalousieanordnung die lichtdurchlässigen Wandflächen, die sich bei starkem Sonneneinfall ungebührlich aufheizen, zu kühlen. Gleichzeitig wird auch did Raumluft gekühlt und somit klimatisiert.

Das sowohl von der Sonneneinstrahlung als auch von der Raumluft erwärmte Strömungsmittel bzw. Wasser, das die einzelnen Lamellen oder Lamellengruppen verläßt, kann einer geeigneten Nutzung zugeführt werden: so ist es z.B. möglich, bei einer Schwimmbadanlage das kalte Leitungswasser, das eine Temperatur von etwa 11° C aufweist, in die Jalousieanordnungen einzuleiten und das diese verlassende temperierte Wasser, das auf etwa 18°C erwärmt wurde, zum Speisen von Freilandduschen zu verwenden. Es ist auch möglich und im Falle etwa eines Wintergartens von Vorteil, die erfindungsgemäße Jalousieanordnung in einem geschlossenen Kreislauf ggf. mit einer Wärmepumpe einzubeziehen, mittels welchem beispielsweise die Wärmeenergie für die Warmwasserversorgung eines Einfamilienhauses gewonnen wird.

Es ist auch möglich, in der kalten Jahreszeit die Lamellen an den Heizkreislauf einer Haus-oder Schwimmbadheizung anzuschließen, wobei die Lamellen wie Plattenheizkörper die Raumluft aufheizen. Hierbei wird ebenfalls die im Winter zwar - schwache, aber dennoch merkliche Sonnenlichtenergie genutzt, da sie ebenfalls zum Aufheizen der Lamellen beiträgt. In diesem Falle verringert sich der Temperaturgradient zwischen Vorund Rücklauf der Heizungsanlage, so daß für die Heizung weniger Energie aufgewandt werden muß.

Wegen der verhältnismäßig großen Heizfläche ist außerdem eine verhältnismäßig niedrige Vorlauftemperatur voll ausreichend, so daß zwischen Heizkessel und Jalousieanordnung nur verhältnismäßig geringe Wärmeverluste auftreten.

Außerdem genügt die erfindungsgemäße Jalousieanordnung in jedem Falle auch den Zwecken einer herkömmlichen Jalousieanordnung: so können z.B. bei der Verwendung unter dem Glasdach einer Veranda oder eines Wintergartens nachts die Lamellen so verstellt werden, daß ein vollständiger Sichtschutz geschaffen ist.

Es ist grundsätzlich möglich, den Stellantrieb für die Lamellen der erfindungsgemäßen Jalousieanordnung über optische Fühler zu steuern, welche etwa an einer der Lamellen angebracht sind und periodisch diese gemeinsam mit allen anderen so lange hin-und herschwenken, bis ein maximaler Lichteinfall gemessen ist. Da eine solche optische Fühleranordnung jedoch wegen der Verschmutzungsgefahr nicht wartungsfrei ist, wird gemäß einer weiteren Ausgestaltung der Erfindung vorgezogen, eine Zeitsteuerung zu verwenden, die die Lage der Lamellen nach einem Zeitprogramm ausrichtet, welches auf den jeweiligen Sonnenstand ausgerichtet ist und beispielsweise zur Nachtzeit das Schließen der Jalousien veranlaßt.

Eine solche Zeitsteuerung kann im Störfall, also etwa bei Ausfall einer Umwälzpumpe im Strömungsmittelkreislauf, die Lamellen um 90° verschwenken, so daß dann, wenn infolge der Störung eine örtliche Überhitzung zu befürchten wäre, der Sonneneinfall auf die absorbierenden Flächen der Lamellen auf ein Mindestmaß reduziert ist.

Es wäre grundsätzlich möglich, über die Zeitsteuerung auch jahreszeitbedingte Parameter einzugeben, wie etwa das Umschalten von Kühl-auf Heizbetrieb. Gemäß einer bevorzugten Ausgestaltung der Erfindung ist es aber besonders von Vorteil, eine Temperaturfühleranordnung vorzusehen, welche selbsttätig notwendige Umschaltmaßnahmen vornimmt. Der Meßwert der Temperaturfühleranordnung kann bevorzugt abhängig von der Temperatur der lichtdurchlässigen Dach-oder Wandfläche sein und veranlassen, daß bei Überschreiten einer Temperaturschwelle die Lamellen der Jalousieanordnung an eine Kühlmittelversorgung angeschlossen werden.

In gleicher Weise kann bei Unterschreiten einer Temperaturschwelle der Anschluß an eine Heizmittelversorgung vorgenommen werden.

Es ist somit möglich, durch die erfindungsgemäße Jalousieanordnung mit verhältnismäßig einfachen Mitteln und geringem Energieaufwand die Klimatisierung eines bisher nur unter großem Aufwand klimatisierbaren Raumes mit lichtdurchlässigem Dach und/oder lichtdurchlässigen Wänden zu erreichen.

Die Jalousien der erfindungsgemäßen Jalousieanordnung sind bevorzugt aus einem stranggepreßten Aluminiumprofil gebildet und allseitig mattschwarz eloxiert . Hierbei ist es durch Zuschnitt möglich, mit einfachsten Mitteln jede gewünschte Jalousielänge herzustellen, so daß die erfindungsgemäße Jalousieanordnung mit einfachen Mitteln auf vorhandene bauliche Verhältnisse abgestimmt werden kann. Es ist somit möglich, vorhandene Gebäude nachträglich auf die erfindungsgemäße Jalousieanordnung umzurüsten.

Die erfindungsgemäße Jalousieanordnung kann auch auf dem Giebelboden eines normalen Hauses eingesetzt werden, wenn z.B. die Dachziegel durch Glasdachziegel ausgetauscht werden; hierbei kann neben der Sonnenlichteinstrahlung auch das sich im Giebelraum eines Hauses stets bildende Warmluftpolster genutzt werden.

Die Anwendungsfälle der erfindungsgemäßen Jalousieanordnung sind mit den obengenannten, bevorzugten Ausführungen noch nicht erschöpft; so ist es z.B. möglich, die Lüftungs-Jalousieanordnung im Dachraum von Stallungen durch erfindungsgemäße Jalousieanordnungen zu ersetzen, wobei zusätzlich zur Erwärmung durch Sonneneinstrahlung auch die Wärme der aus der Jalousie austretenden, warmen Stalluft genutzt werden kann. Die von der Jalousieanordnung gewonnene Abwärme kann zum Erhitzen von Brauchwasser, zum Betrieb einer Kühlanlage oder zur unmittelbaren Speisung einer Wohnraum-Fußbodenheizung verwendet werden.

Es ist aber auch möglich, die erfindungsgemäße Jalousieanordnung in Büroräumen mit großflächigen Glaswänden einzusetzen, wobei die gewonnene Wärme im Winter zur Speisung einer Heizung, im Sommer zum Betrieb des Kühlaggregats einer Klimaanlage verwendet werden kann.

Hierbei ist es nicht erforderlich, die Lamellen mit horizontaler Schwenkachse anzuordnen; sie können auch in diesem Falle vorteilhaft mit vertikaler Schwenkachse angeordnet sein, und zwar entsprechend den jalousieähnlichen Sicht-und Sonnenschutzvorhängen, die bisher vor den Glaswänden von Bürohäusern verwendet werden.

Wie eingangs beschrieben, können die Lamellen der erfindungsgemäßen Jalousieanordnung unmittelbar im Freien angeordnet sein. Nachteilig ist hierbei jedoch der Umstand, daß ein Teil der absorbierten Wärme durch die Umgebungsluft wieder abgeführt wird. Daher ist es gemäß einer weiteren Ausgestaltung der Erfindung besonders von Vorteil, bei einer für die Aufstellung im Freien bestimmten Jalousieanordnung jede der Lamellen von einer wärmeisolierenden Außenabdeckung zu umkleiden, die den Lichteintritt zur absorbierenden Fläche gestattet. Bevorzugt ist diese Isolierung als auf die Lamelle aufgeschobenes Acrylglasprofil ausgebildet, welches die Lamelle mit Abstand umgibt.

Die aneinander angrenzenden Längskanten der Lamellen bzw. die Isolierung können mit einander hintergreifenden Profilen versehen werden, so daß die gesamte Lamellenanordnung ihrerseits mindestens dann, wenn die Drehachsen in Gefällerichtung verlaufen, eine regendichte Dachfläche bilden können.

Wie bereits oben erwähnt, können längere Lamellen zur besseren Lagerung in Lamellenabschnitte unterteilt sein, die durch Strömungsmittel-Anschlußstutzen, welche gleichzeitig die Schwenkachse der Lamelle bilden, miteinander verbunden sind.

Da die erfindungsgemäße Jalousieanordnung wahlweise als Innenraumheizung auch dann verwendet werden kann, wenn sie nicht von Wärmeaustausch-Strömungsmittel durchflossen wird, kann eine erhebliche Erwärmung und somit ein Wärmeverzug der Lamellen eintreten. Um dies zu vermeiden, könnten die Strömungsmittel-Anschlußstutzen, welche die einzelnen Lamellenabschnitte miteinander verbinden, aus stauchfähigem, nachgiebigem Material gebildet sein, wie z.B. Kunststoff. Gemäß einer bevorzugten Ausgestaltung der Erfindung aber sind die aneinander angrenzenden Strömungsmittel-Anschlußstutzen mit Dehnungs-Ausgleichskupplungen verbunden. Durch diese Ausgestaltung wird nicht nur der Wärmeverzug einer Lamelle vermieden, sondern außerdem wird die Montage stark erleichtert, da die einzelnen Lamellenabschnitte einzeln zum Einbauort transportiert werden können und erst dort zusammengesetzt zu werden brauchen.

Hierbei ist es möglich, die Strömungsmittel-Anschlußstutzen teleskopartig ineinander eingreifend auszubilden und zwischen dem Ende des inneren Stutzens und einer nach innen vorspringenden Schulter des außenliegenden Stutzens einen zusammendrückbaren Dichtungsring vorzusehen. Es ist aber auch möglich, an den Strömungsmittel-Anschlußstutzen jeweils die Hälfte einer Steckkupplung anzubringen, wie sie als Gartenschlauch-Schnellkupplung bekannt ist.

Die Lamellen sind in der Regel so breit, daß sie dann, wenn sie alle in eine gemeinsame Ebene geschwenkt sind, einander mit ihren benachbarten Kanten nahezu berühren. Gemäß einer weiteren Ausgestaltung der Erfindung ist es besonders vorteilhaft, an diesen Kanten (oder an den entsprechenden Kanten einer die Lamellen umschließenden Isolierung) Ausbildungen vorzusehen, welche dazu eingerichtet sind, einander zu hintergreifen, so daß die erfindungsgemäße Jalousieanordnung eine regendichte Wand bilden kann. Diese Jalousieanordnung kann somit vorteilhafterweise ein alleinstehendes Energie-Vordach bilden, das in geschlossenem Zustand regendicht ist, in geöffnetem Zustand jedoch Sonnenschutz-und Energiesammler. Es ist auch möglich, die Jalousieanordnung anstelle einer Dach-oder Wandfläche zu verwenden, wobei die erfindungsgemäße Jalousieanordnung bei Regen geschlossen ist. Bei trockenem Wetter können die Lamellen zu Lüftungszwecken verschwenkt werden. Bei Sonne können sie zur Erreichung eines guten Wirkungsgrades quer zum einfallenden Sonnenlicht angeordnet werden.

Da der Wasserinhalt der erfindungsgemäßen Lamelle außerordentlich gering ist, ist sie wesentlich leichter als bekannte Lamellen. Außerdem liegt ein weiterer Vorteil einer solchen Lamelle darin, daß das das Wasser führende Rohr eine verhältnismäßig geringe Oberfläche aufweist und außerdem aus einem sehr beständigen Material besteht. Wärme-und witterungsbedingte Risse, Hagelschlag oder auch Luftgewehrkugeln bösartiger Nachbarn können somit nicht zu Leckstellen führen.

Gemäß weiterer Ausbildungen der Erfindung soll das Gewicht der Lamellen noch weiter verringert werden und sollen die Vorzüge, die aus dieser Gewichtsverringerung resultieren, genutzt werden. Ferner soll der baukastenmäßige Aufbau einer solchen Jalousieanordnung ermöglicht werden, was es wiederum Laien ermöglicht, fertige Bausätze zu erwerben und selbst mit geringem Aufwand zu montieren.

Zu diesem Zweck ist gemäß Anspruch 8 die Jalousieanordnung erfindungsgemäß dahingehend weitergebildet, daß alle Wandungen des die Lamellen bildenden Aluminium-Profilstabes im wesentlichen die gleiche Wandstärke aufweisen. Diese Wandstärke kann auf ein durch die Strangpreßtechnik einerseits und die Biegebeständigkeit andererseits mögliches Mindestmaß verringert werden; wegen der guten Wärmeleitfähigkeit des Aluminium hat sich nämlich herausgestellt, daß die Dicke eines Lamellenflügels im Verhältnis zu dessen Breite recht gering sein kann, ohne daß deshalb nennenswerte Wärmeverluste auftreten.

Durch diese Maßnahme wird das Gewicht der Lamellen noch weiter verringert.

Gemäß einer weiteren Ausgestaltung der Erfindung ist am Rohr seitlich nur ein einziger Lamellenflügel angeformt. Es ist zwar grundsätzlich wegen der symmetrischen Belastung des Antriebsmechanismus von Vorteil, zwei einander gegenüberliegende. Lamellenflügel zu haben, doch wenn man eine Jalousieanordnung mit Lamellen verwendet, bei denen sich benachbarte Lamellen mit ihren Rändern in geschlossener Stellung der Jalousie aufeinander abstützen, dann können sich zu dünne Lamellen verbiegen, so daß Luftzug, Wasser und dergleichen in den Fugen zwischen den aneinander angrenzenden Lamellenrändern eindringen kann. Wird aber, wie bei der erfindungsgemäßen Ausgestaltung vorgesehen, nur ein einziger Lamellenflügel verwendet, dann stützt sich dieser in der Schließstellung der Jalousieanordnung auf dem sehr biegesteifen und festen Rohr der benachbarten Lamelle ab, so daß trotz der dünnen Ausbildung der Lamelle eine gute Abdichtung zwischen den einzelnen Lamellen in geschlossenem Zustand der Jalousieanordnung erreicht wird.

Auch bei der Jalousieanordnung der eingangs genannten, älteren Patentanmeldung ist bevorzugt die Lamelle von einer Außenhülle umgeben, so daß innerhalb der Lamelle ein Treibhauseffekt entsteht, da die Kühlung der eigentlichen Lamelle durch Konvektion nicht möglich ist.

Um auch diese Außenhülle so leicht wie nur möglich zu machen, ist sie gemäß einer bevorzugten Ausgestaltung der Erfindung als geschlossenes Hohlprofil hergestellt, das selbst bei äußerst geringer Wandstärke noch eine ausreichende Festigkeit hat, um transportiert und gehandhabt zu werden. Dieses Hohlprofil ist erfindungsgemäß in Längsrichtung der Lamelle auf diese aufgeschoben, so daß eine Lamellenanordnung entstanden ist, welche zwar ein verhältnismäßig hohes Innenvolumen hat, dennoch aber ein geringes Gewicht, denn nur das Rohr, nicht aber das gesamte Innenvolumen ist von der Wärmeaustauschflüssigkeit durchströmt.

Die Außenhülle bzw. die gesamte von dieser gebildete Isolierung ist bevorzugt aus Acrylglas gebildet und muß möglichst lichtdurchlässig sein, um zu vermeiden, daß sich die Isolierung unzulässig aufheizt und andererseits Strahlungsenergie daran gehindert wird, auf die eigentliche Lamelle zu treffen.

Gemäß einer weiteren Ausgestaltung der Erfindung ist aber die bei normalem Betrieb von der Sonne abgewandte Fläche der Außenhülle lichtreflektierend ausgebildet, eingefärbt, beschichtet oder hinterlegt; diese Anordnung verhindert zunächst, daß auch dem von der Jalousieanordnung begrenzten Raum Wärme entzogen wird, da diese in den Raum hinein zurückreflektiert wird. Besonders wichtig ist dabei der Vorteil, daß es möglich ist, durch Schwenken der Lamellen um 180° die reflektierende Oberfläche nach außen bzw. der Sonne entgegen zu wenden.

Dies ist z.B. dann erforderlich, wenn durch eine Betriebstörung, z.B. eine Leckstelle oder den Ausfall einer Umwälzpumpe, sich kein Wärmeaustauschmedium im Inneren des Rohres befindet oder das Wärmeaustauschmedium nicht mehr weitergefördert werden kann. In diesem Fall würde nämlich infolge des Treibhauseffektes eine so starke Überhitzung des von der Isolierung umgebenen Innenraumes auftreten, daß die Isolierung ihrerseits thermisch geschädigt werden könnte.

Ferner kann dann, wenn die Jalousieanordnung nur verhältnismäßig selten benutzt wird und in der Regel unbeaufsichtigt ist, jede Lamelle mit ihrer reflektierenden Seite nach außen geschwenkt werden, so daß außerhalb der Betriebszeiten kein Schaden zu fürchten ist. Dies ist besonders dann wesentlich, wenn die erfindungsgemäße Jalousieanordnung bei Wochenendhäusern, Badehütten oder dergleichen verwendet wird, also tage- oder wochenlang unbeaufsichtigt ist.

Gemäß einer weiteren, bevorzugten Ausgestaltung der Erfindung ist die der Sonne zugewandte Fläche des Lamellenflügels bzw. der Außenhülle als Boden einer rinnenartigen Vertiefung ausgebildet. Durch diese Maßnahme wird die Steifigkeit der Lamelle bzw. der Isolierung noch weiter erhöht und somit die Möglichkeit geschaffen, die Wandstärke dieser Elemente noch weiter zu senken, so daß auch das Gewicht gesenkt wird. Gleichzeitig dient die rinnenartige Vertiefung in geschlossener Stellung der Jalousie als Regenrinne, bei welcher das Wasser von den Fugen zwischen aneinander angrenzenden Lamellen weg und zum Boden der rinnenartigen Vertiefungen hin geleitet wird, so daß die erfindungsgemäße Jalousieanordnung voll als Außenwandfläche eines Gebäudes verwendet werden kann.

Soweit die Lamelle der erfindungsgemäßen Jalousieanordnung ohne Isolierung ausgebildet ist, bildet gemäß einer weiteren, bevorzugten Ausgestaltung der Erfindung das Rohr die eine Seitenbegrenzung der rinnenartigen Vertiefung, deren Boden von dem Lamellenflügel gebildet wird. Dessen freie Kante ist abgewinkelt und bildet die andere Begrenzung der rinnenartigen Vertiefung.

Vorzugsweise ist hierbei der Boden dieser Vertiefung so angeordnet, daß er tangential in die Rohrwand übergeht. Auf diese Art ist nicht nur das Material für die eine Seitenbegrenzung der Rinne eingespart, da diese Seitenbegrenzung vom Rohr gebildet ist, sondern es wird außerdem eine Lamelle geschaffen, deren Innenseite eine verhältnismäßig glatte Fläche bildet, so daß die einem Innenraum zugewandte Sichtseite stets einfach sauber zu halten und zu reinigen ist. Ein weiterer Vorteil dieser Anordnung liegt darin, daß bei starker Erwärmung des Lamellenflügels Wärmestrahlung, die trotz seiner schwarzen Einfärbung von ihm noch nach außen ausgehen könnte, zum Teil auf das Rohr trifft und von dessen dem Boden der rinnenartigen Vertiefung zugewandter, ebenfalls geschwärzter Wand absorbiert wird.

Gemäß einer weiteren, bevorzugten Ausgestaltung der Erfindung ist die freie Längskante des Lamellenflügels, die dem Rohr gegenüberliegt, zur benachbarten Lamelle hin so gewölbt, daß sie deren Rohr passend umgreift und sich bündig an die Außenseite des Rohres anlegt. Es wird somit eine Jalousieanordnung geschaffen, bei welcher in geschlossener Stellung nicht nur ein guter, dichtender Abschluß zwischen benachbarten Lamellen geschaffen ist, sondern bei welcher jeder dünne Lamellenflügel sich beiderseits auf einem Rohr abstützt, so daß eine insgesamt sehr tragfähige Anordnung geschaffen ist, welche gegebenenfalls als Dachfläche auch von einem Kaminkehrer begangen werden kann oder imstande ist, einer hohen Schneelast standzuhalten.

Da die Lamellen um die Mittelachse des Rohres schwenkbar sind, ist es möglich, nach einem Regen das nasse Dach durch Verschwenken der Lamellen zu öffnen, wobei das Wasser dann in den zwischen Rohr und Boden der rinnenartigen Vertiefung geschaffenen Spalt abfließt und somit nicht in das Innere des unter dem geöffneten Dach liegenden Raumes abtropft.

Auch die erfindungsgemäße, mit einer Isolierung versehene Lamelle kann, wie oben erwähnt, auf ihrer Sonnen-, Außen- bzw. Oberseite mit einer rinnenartigen Ausbildung versehen sein; in diese wird jedoch das Rohr nicht einbezogen, sondern die rinnenartige Ausbildung wird von zwei von der Außenhülle abstehenden Stegen gebildet, von welchen der eine, der dem Rohr bzw. der Schwenkachse der Lamelle nächstgelegen ist, einen hakenartigen Querschnitt aufweist, wobei sein freies Ende sich über den Boden der rinnenartigen Vertiefung und etwa parallel zu dieser erstreckt. Es wird somit eine regelrechte Auffangrinne geschaffen, die bei Aufschwenken der noch nassen Lamellen nach einem Regen alles abtropfende Wasser auffängt und ableitet. Die andere Seitenbegrenzung der rinnenartigen Vertiefung ist so ausgebildet, daß sie die eben beschriebene Regenrinne der benachbarten Lamelle voll von oben bzw. außen her umgreift, so daß die Ober- bzw. Außenseite dieser Regenrinne stets trocken bleibt. Es ist somit auch nicht möglich, daß von der Außenseite der Regenrinne beim Öffnen der Jalousieanordnung Wasser in den darunter liegenden Raum abtropft.

Es ist grundsätzlich möglich, jede Lamelle bzw. jede Reihe miteinander fluchtender Lamellen auf einem Rohrstutzen zu lagern, der in das Rohr im Inneren der Lamelle dichtend eingreift. Dieser Rohrstutzen kann dann seinerseits an eine Sammelleitung angeschlossen sein, welche bei Parallelschaltung der Lamellen bzw. Lamellen reihen vom Vor- und Rücklauf des Wärmeaustauschmediums durchströmt wird.

Der Bau einer solchen Sammelleitung ist jedoch verhältnismäßig schwierig, zumal die einzelnen Anschlußstutzen miteinander fluchten müssen. Ein Laie ist in der Regel nicht imstande, eine solche Sammelleitung einzurichten und zu installieren.

Um diesem Nachteil abzuhelfen, wird gemäß einer weiteren Ausgestaltung der Erfindung vorgeschlagen, daß die Sammelleitung nicht als durchgehendes Rohr aufgebaut ist, sondern aus einer Reihe von Einzelelementen mit jeweils genau definierter Länge, die miteinander verbunden bzw. hintereinandergeschaltet werden. Somit ist es möglich, die beiden Sammelleitungen genau gleichartig aufzubauen, so daß -die gleiche Einbauhöhe der zusammengesetzten Sammelleitungen vorausgesetzt - die Montage der Lamellen dann keinerlei Schwierigkeiten mehr bereitet.

Die Einzelelemente können miteinander verschraubt sein, sind aber vorzugsweise zusammengesteckt, wobei die Steckverbindungen ihrerseits aus Hülsen bzw. Bohrungen einerseits und Hohlzapfen andererseits gebildet sind, zwischen denen Gleitringdichtungen angeordnet sind. Es können somit die einzelnen Verbindungsstellen Wärmedehnungen und ähnliche, im Gebrauch noch auftretende Längenänderungen aufnehmen, ohne daß deshalb die gesamte Anordnung verspannt wird.

Es ist grundsätzlich möglich, die Einzelelemente ihrerseits an einem Bauwerk zu befestigen. Gemäß einer bevorzugten Ausgestaltung der Erfindung ist jedoch eine Montage-Hohlprofilschiene vorgesehen, welche einseitig offen ist bzw. einen Längsschlitz aufweist und in welche Einzelelemente eingeschoben werden können. Es ist somit möglich, die gesamte Jalousieanordnung zunächst provisorisch vorzumontieren, dann einzujustieren und schließlich endgültig zu befestigen.

In die Hohlprofilschiene sind Verteilerblöcke eingeschoben, welche als Aluminium-oder Kunststoffquader oder -würfel ausgebildet sind. Diese Blöcke weisen jeweils auf ihren gegenüberliegenden Seiten in Längsrichtung der Schiene und quer hierzu zum Schlitz der Schiene auswärts weisend eine Bohrung auf. In den Bohrungen sind Rohrstutzen befestigt, und zwar hohle Verbindungsstutzen, hohle, auswärts weisende Lager-Rohrstutzen und verschlossene Blindstutzen. Die einander zugewandten Stutzen zweier benachbarter Verteilerblöcke sind mit einem Zwischenrohr verbunden. Dieses Zwischenrohr bildet gleichzeitig ein Distanzstück. Die Stutzen sind hierbei an ihrer Außenseite mit einer Ringdichtung versehen, welche gegenüber dem aufgeschobenen Verbindungs-oder Abstandsrohr abdichten.

Durch entsprechende Anordnung von Verbindungsstutzen und Blindstutzen ist es möglich, nicht nur beiderseits der Lamellen bzw. Lamellenreihen eine durchgehende Sammelleitung zu bilden, sondern Lamellen und Lamellenreihen bzw. Gruppen dieser Elemente hintereinanderzuschalten, da durch Einschalten von Blindstutzen die Strömung in Längsrichtung der Montageschiene unterbrochen und in die Rohre der benachbarten Lamellen eingeleitet wird.

Da die Eingangstemperatur des Wärmeaustauschmediums bzw. Wassers in der Regel festliegt und die mittlere Sonneneinstrahlung festliegt, ist es möglich, durch entsprechende Schaltung der einen Sonnenkollektor bildenden Lamellen eine Jalousieanordnung zu schaffen, welche Wasser mit einem solchen Durchsatz und einer solchen Temperatur abgibt, wie dies gerade erwünscht ist; sollen mit dem von der Jalousieanordnung gebildeten Sonnenlichtkollektor z.B. im Sommer die Außenduschen einer Schwimmbadanlage betrieben werden, so ist ein verhältnismäßig hoher Wasserdurchsatz erforderlich; die Endtemperatur des Wassers sollte aber 18°C nicht wesentlich übersteigen. Anders ist der Fall z.B. bei der Verwendung der erfindungsgemäßen Jalousieanordnung als Dach eines Kuhstalls: dort ist es erforderlich, zwischen den einzelnen Melkzeitpunkten Wasser mit verhältnismäßig hoher Temperatur und verhältnismäßig geringem Durchsatz in einem wärmeisolierten Speicher zu sammeln, um das erforderliche Spülwasser für die Melkanlage zur Verfügung zu haben. Hierbei kann durch geeignete Schaltung der Jalousieanordnung eine aufwendige Wärmepumpe ganz eingespart oder zumindest in ihrer Leistung und Größe stark vermindert werden.

Sollte sich außerdem einmal eine Fehldimensionierung der Jalousieanordnung ergeben, kann sie ohne weiteres mit geringem Aufwand zerlegt und anders geschaltet werden.

Es ist grundsätzlich möglich, die an den Enden sitzenden Verteilerblöcke mit Klemmelementen oder Schrauben zu befestigen und in ihren vorhandenen, freien Anschluß einen Verbindungsstutzen einzusetzen, an welchen eine Außenleitung anschließbar ist.

Gemäß einer bevorzugten Ausgestaltung der Erfindung ist es jedoch besonders von Vorteil, nach ordnungsgemäß positioniertem Endblock diesen von außen her durch die Montageschiene anzubohren und in diese Bohrung einen Verbindungsstutzen einzusetzen. Die verbleibende, freie Bohrung wird durch einen Blindstutzen verschlossen. Der besondere Vorteil dieser Anordnung liegt darin, daß mit einfachsten Mitteln eine zuverlässige, jedoch mit einfachen Mitteln lösbare Halterung geschaffen ist.

Außerdem ist es möglich, die Außenleitung aus einer solchen Richtung heranzuführen, in welcher sie die Funktion der erfindungsgemäßen Jalousie nicht beeinträchtigen kann.

Die Verteiler-bzw. Endblöcke sind vorteilhaft aus einem Kunststoff hergestellt, der in geringem Grade flexibel ist, so daß die in Bohrungen bzw. Durchbrüche eingeschraubten Stutzen ohne weitere Maßnahmen abgedichtet sind.

Die oben erwähnten Bohrungen in den Verteiler-bzw. Endblöcken treffen in deren Mitte zusammen.

Um zu vermeiden, daß Fremdkörper in die Montage-Hohlprofilschiene gelangen und gegebenenfalls die Verschwenkung der Lamellen verhindern, ist gemäß einer weiteren, bevorzugten Ausgestaltung der Erfindung der Längsschlitz der Hohlprofilschiene, der neben den Stirnflächen der Lamellen liegt, durch eingeschobene oder eingeklemmte Abdeckbleche verschlossen. Die beiden Flanken der Hohlprofilschiene, welche deren Längsschlitz begrenzen, weisen bevorzugt jeweils einander zugewandt eine Rille auf, in welche die Abdeckbleche eingeschoben oder eingerastet werden können. Es ist somit ein geschlossener, auch einen ästethetischen Anblick bietender Rahmen geschaffen, innerhalb dessen die gesamte Endleitungsanordnung untergebracht ist.

Zum Antrieb von Jalousieanordnungen ist es bekannt, die freien Kanten der Jalousieflügel mit einer gemein-. samen Querstange gelenkig zu verbinden, deren Längsbewegung dann gemeinsam alle so verbundenen Lamellen verschwenkt. Diese Verschwenkbewegung ist jedoch nur über einen verhältnismäßig geringen Winkelbereich möglich.

Erfindungsgemäß wird daher vorgeschlagen, mindestens an einem Ende jeder Lamelle einen Endzylinder anzubringen, der seinerseits der einfacheren Herstellung halber nicht starr oder einstückig mit dem Lamellenende verbunden ist, sondern lediglich formschlüssig aufgeschoben ist. Eine Antriebseinrichtung greift dann an diesem Endzylinder an und verschwenkt zusammen mit diesem auch die zugeordnete Lamelle.

Der Endzylinder sitzt auf einer Hohlachse, welche mit ihrem einen Ende in das Rohr der Lamelle eingreift und mittels einer Ringdichtung dichtend mit diesem verbunden ist, während das andere Ende der Hohlachse über den Endzylinder um eine mehr oder weniger lange Strecke übersteht. Der Endzylinder weist eine mittige Durchgangsbohrung zur Aufnahme der Hohlachse auf, welche auf der an die Lamelle angrenzenden Seite abgedeckt und so weit vergrößert ist, daß das Rohr der Lamelle in den Endzylinder einschiebbar ist. Um dies zu ermöglichen, ist ferner das der Lamelle zugewandte Stirnende des Endzylinders quergeschlitzt, wobei der Schlitz so bemessen ist, daß er auf die Lamelle bzw. Lamellen aufschiebbar ist. Es ist somit mit einfachen Mitteln möglich, eine zuverlässige formschlüssige Verbindung zwischen Endzylinder und Lamelle herzustellen.

Zum Antrieb ist gemäß einer bevorzugten Ausgestaltung der Erfindung ein Zahnkranz fest mit dem Endzylinder verbunden und vorzugsweise einstückig mit diesem ausgebildet. Der Zahnkranz kann mit einer Zahnstange in Verbindung stehen, deren Längsbewegung bei entsprechender Dimensionierung die volle Umdrehung einer Lamelle um 360° ermöglichen kann.

Der Endzylinder ist bevorzugt als Druck-oder Spritzgußteil aus Aluminium oder Zink, vorzugsweise aber aus einem geeigneten Kunststoff ausgebildet, da dieser Endzylinder noch zum Gewicht der Lamelle beiträgt und daher möglichst leicht sein sollte.

Bei Jalousieanordnungen, die aus parallelen Reihen jeweils hintereinanderliegender, miteinander fluchtender Einzellamellen gebildet sind, kann es erwünscht sein, zum Vereinfachen des Antriebs möglichst alle Lamellen gleichzeitig zu verschwenken. Um dies zu erreichen, sind gemäß einer weiteren, bevorzugten Ausgestaltung der Erfindung die beiden einander zugewandten Endzylinder zweier benachbarter, miteinander fluchtender Lamellen drehfest miteinander verbunden; diese Verbindungsstelle wird bevorzugt von einer durchgehenden Hohlachse durchsetzt , welche dichtend in den Rohren der beiden benachbarten Lamellen sitzt.

Es kann aber auch von Vorteil sein, einzelne Jalousiegruppen unterschiedlich zu verstellen. In diesem Fall sind die beiden benachbarten Endzylinder nicht drehfest miteinander verbunden.

Wenn die beiderseits von Lamellenreihen angeordneten Montage-Hohlprofilschienen festmontiert sind, dann können die Lamellen nur dann aus-und eingebaut werden, wenn mindestens eine Lamelle gegenüber den anderen in ihrer Längsrichtung verschieblich ist. Um dies zu erreichen, ist gemäß einer weiteren Ausgestaltung der Erfindung die zwei benachbarte Endzylinder miteinander verbindende Hohlachse geteilt ausgeführt, wobei zwischen den zwei gebildeten Halbachsen ein Abstand geschaffen ist. Dieser Abstand ist so bemessen, daß die Montage der Lamellen ermöglicht ist.

Über das freie Ende einer der beiden Halbachsen ist eine Gleithülse aufgeschoben,. die nach Einbau der Lamellen über den zwischen den beiden Halbachsen gebildeten Zwischenraum - schiebbar ist, wobei die Gleithülse mit Gleitringdichtungen an jedem Ende der Halbachsen in dichtendem Eingriff steht. Diese geteilte Verbindung zwischen zwei benachbarten Endzylindern verbindet diese in der beschriebenen Ausführungsform nicht drehfest, so daß die Drehung benachbarter Lamellen durch eine solche Verbindung entkoppelt werden kann.

An der Verbindungsstelle zwischen zwei Endzylindern ist bevorzugt auch eine Drehlagerung für die Lamellen einer Lamellenreihe vorgesehen. Hierbei ist besonders von Vorteil, daß durch die Verbindung zweier benachbarter Lamellen durch eine Hohlachse, die mit ihren Enden über Gleitringdichtungen in die Rohre der beiden Lamellen eingreift, eine drehbare Ausgleichskupplung geschaffen ist, wenn der Außendurchmesser der Hohlachse deutlich kleiner ist als der Innendurchmesser des Rohres. Eine solche Ausbildung ist bei entsprechender Dimensionierung der Gleitringdichtung völlig problemlos möglich.

Da bekanntlich die Wandflächen von Gebäuden selten genau eben sind, ist dennoch die Anbringung der erfindungsgemäßen Jalousieanordnung unmittelbar an einer Wandfläche möglich, ohne daß durch Distanzstücke, Unterlegungen oder ähnliche Maßnahmen erst dafür gesorgt werden muß, daß die Jalousieanordnung ihrerseits völlig eben liegt.

Es ist daher möglich, die Hohlachse bzw. die beiden Halbachsen in einem Lagerblock zu lagern, der gebäudefest anbringbar und gemäß einer bevorzugten Ausgestaltung der Erfindung aus zwei Lagerschalen gebildet ist. Hierbei sind vorzugsweise die beiden Lagerschalen aus einem Kunststoff gebildet, der gegenüber dem Metall der Hohlachse bzw. der Halbachsen einen besonders niedrigen Reibungsbeiwert aufweist.

Bei der Verbindung zweier Endzylinder durch zwei Halbachsen und Gleithülsen weist jede der Lagerschalen zwei Lagerstellen auf, die unmittelbar neben den beiden Endzylindern liegen und die von der Gleithülse getrennt sind. In den Lagerschalen ist ferner eine Aussparung geschaffen, welche die Gleithülse aufnimmt. Auch die Gleithülse kann ihrerseits vorzugsweise in der Lagerschale in der genannten Aussparung drehbar gelagert sein, so daß die Abstützfläche in der Lagerschale verhältnismäßig hoch ist und somit an die Tragfähigkeit des für die Lagerschale verwendeten Kunststoffs nur geringe Anforderungen gestellt werden müssen, so daß die Auswahl dieses Kunststoffs allein nach Kriterien des Reibungsbeiwerts getroffen werden kann.

Wegen des geringen Reibungsbeiwerts zwischen dem Aluminium und dem Kunststoff führen während des Betriebs die durch Gleitringdichtungen miteinander verbundenen Teile keine Relativdrehung durch.

Es ist grundsätzlich möglich, die Lagerschalen einzeln an der Wand zu befestigen, etwa mittels Dübeln. Gemäß einer bevorzugten Ausgestaltung der Erfindung ist jedoch eine Profilleiste vorgesehen, in deren Profil die einzelnen Lagerschalen einschiebbar sind.

Es ist nun möglich, von den einzelnen Lagerschalen nur die Endschalen zu befestigen und im übrigen die Lagerschalen über Distanzstücke aufeinander abzustützen. Da es aber bei der Montage zweckmäßig ist, für jede Lagerschale die individuell beste Lage zu ermitteln, in welcher die geringste Reibung auftritt, ist die Verwendung von Distanzstücken ohne Beilagen unzweckmäßig und mit Beilagen kompliziert. Gemäß einer bevorzugten Ausgestaltung der Erfindung ist daher die in der Profilleiste geführte Lagerschale mit dieser verschraubt, wobei nach der genauen Positionierung der Lagerschale die Kernlochbohrung der Schraube eingebracht werden kann, in welche dann z.B. eine Blechschraube eingreift.

Um die Montage zu erleichtern, ist es auch möglich, die Lagerschale nicht in Längsrichtung in die Profilschiene einzuschieben, sondern unmittelbar an der Montagestelle einzurasten.

Die zweite, von außen her die Verbindung zwischen den beiden Endzylindern umgreifende Lagerschale ist gemäß einer weiteren, bevorzugten Ausgestaltung der Erfindung mit der ersten Lagerschale verrastet, wodurch nicht nur die Montage vereinfacht wird, sondern auch die Relativlage der beiden Lagerschalen festgelegt ist. ‛

Im übrigen genügt die Verrastung der beiden Lagerschalen, da, wie bereits eingangs erwähnt, das Gewicht der Lamellen außerordentlich gering ist.

Aus diesem Grunde sind die außenliegenden, auf den festgeschraubten Lagerschalen aufgerasteten Lagerschalen auch hinlänglich tragfähig, um eine Abdeckprofilschiene zu tragen, welche von außen her auf die außenliegenden Lagerschalen gemäß einer bevorzugten Ausgestaltung der Erfindung aufgeklemmt ist.

Um zu verhindern, daß zwischen die Lagerschalen, die Profilleiste und die Abdeckprofilschiene Fremdkörper gelangen, welche die Drehung der Lamellen beeinträchtigen können, sind diese Zwischenräume nach außen hin durch Abdeckbleche verschlossen.

Im übrigen ist es besonders von Vorteil, die beiden Lagerschalen baugleich auszubilden, wobei das Schraubenloch der außenliegenden Lagerschale ungenutzt bleibt.

Ferner sind gemäß einer weiteren, bevorzugten Ausgestaltung der Erfindung alle Gleitringdichtungen und bevorzugt auch alle Endzylinder baugleich. Das heißt, daß auch alle Aufnahmebohrungen für die Hohlachsen, sowie die Verbindungs-Lager-und Blindstutzen den gleichen Außendurchmesser aufweisen, während der Rohrinnendurchmesser gleich ist dem Innendurchmesser der Bohrun gen in den Verbindungs-bzw. Endblöcken sowie der Abstandrohre.

Es ist somit zusammen mit den gleichartig ausgebildeten Lagerblöcken eine Jalousieanordnung geschaffen, die mit einer sehr geringen Anzahl unterschiedlicher Elemente auskommt, welche ihrerseits dann in den verschiedendsten Funktionsweisen benutzt wird.

Wie bereits oben erwähnt, ist die erfindungsgemäße Jalousieanordnung besonders für eine Dachfläche geeignet, wobei bevorzugt die Lamellen längs der Falllinie der Dachfläche verlaufen, wobei verhindert wird, daß sich Schmutz an der Außenseite der Lamellen ansammelt.

Ferner betrifft die Erfindung ausdrücklich auch einen Bausatz, in dem die auf wenige Grundformen reduzierten Einzelemente zum Aufbau der erfindungsgemäßen Jalousieanordnung untergebracht sind.

Ferner betrifft die Erfindung Gebäude mit mindestens einer für Sonnenlicht durchlässigen Wand- und/oder Dachfläche, gemäß dem Oberbegriff des Anspruchs 8, wobei eine Jalousie der eingangs genannten Art außerhalb oder innerhalb einer solchen durchlässigen Wandfläche angebracht ist.

Ein Gebäude dieser Art ist z.B. ein Wintergarten, eine überdachte Veranda, ein Schwimmbad mit lichtdurchlässigem Dach und/oder lichtdurchlässigen Wänden oder ein Gewächshaus.

Gebäude dieser Art haben in der kalten Jahreszeit den Vorteil, die Sonnenstrahlung durch die lichtdurchlässigen Dach-oder Wandflächen verhältnismäßig ungehindert einfallen zu lassen, so daß die Sonnenstrahlen, die im Inneren des Gebäudes auf Gegenstände auftreffen, diese und damit auch die Luft im Gebäude erwärmen. Das Entweichen der Warmluft wird aber durch die genannten lichtdurchlässigen Wände verhindert. Der Nachteil solcher Gebäude liegt aber darin, daß bei zu starkem Sonnenlichteinfall, z.B. im Hochsommer, das Innere des Gebäudes übermäßig und in durchaus unerwünschter Weise aufgeheizt wird. Aus diesem Grund war es bisher üblich, neben jeder der lichtdurchlässigen, der Einstrahlung des Sonnenlichts ausgesetzten Wand eine Jalousieanordnung anzubringen, mit Lamellen, deren gegen den Lichteinfall schwenkbare Oberfläche mit einer lichtreflektierenden Beschichtung versehen ist. Somit kann bei Einfall zu starken Sonnenlichtes dieses in einstellbarem Masse reflektiert werden, so daß nur der erwünschte Anteil der Sonnenlichteinstrahlung in das Innere des Gebäudes gelangt.

Solche Jalousieanordnungen sind z.B. bei Gewächshäusern außerhalb der lichtdurchlässigen Wand-und Dachflächen angeordnet. Hierbei liegt ein Nachteil darin, daß die das Sonnenlicht reflektierenden Flächen verschmutzen, so daß sich nach längerer Gebrauchszeit die gesamte Jalousieanordnung in unerwünschter Weise aufheizt.

Dieser Nachteil wird dadurch verhindert, daß man die Jalousieanordnungen im Inneren des Gebäuses vorsieht; hierbei entsteht jedoch unmittelbar unter der lichtdurchlässigen Dachfläche bzw. hinter der lichtdurchlässigen Wandfläche eine so starke örtliche Aufheizung, daß der sich infolge dieser einstellende Wärmeverzug der lichtdurchlässigen Bauteile zu deren Zerstörung führen kann. Es ist daher für einen ausreichenden Abstand zwischen Wandfläche und Jalousie und für eine ausreichende Belüftung des Zwischenraumes zwischen diesen Elementen zu sorgen.

Außerdem muß ein solches Gebäude während der Heizperiode, um nutzbar zu sein, zusätzlich beheizt werden, so daß zusätzlich normale, an einen Heizkreislauf anschließbare Heizkörper erforderlich sind.

Ein bisher nicht ausgeräumter Nachteil aller Lösungen liegt darin, daß bei unerwünscht starkem Sonnenlichteinfall der unerwünschte Anteil der Sonnenstrahlung nicht nur auf aufwendige Weise abgeleitet werden muß, sondern auch insgesamt verloren geht.

Der Gegenstand der Erfindung wird anhand der beigefügten, schematischen Zeichnung beispielsweise noch näher erläutert; in dieser zeigen:

Fig. 1 die Teilansicht eines erfindungsgemäßen Gebäudes, dessen lichtdurchlässige Dachfläche eine erfindungsgemäße Jalousieanordnung aufweist,

Fig. 2 die Seitenansicht einer Lamelle der erfindungsgemäßen Jalousieanordnung,

Fig. 3 den Querschnitt durch eine Lamelle,

Fig. 3a den Querschnitt durch eine andere Ausführungsform der Lamelle,

Fig. 4a bis d verschiedene, schematisch dargestellte Anwendungsfälle für die erfindungsgemäße Jalousieanordnung.

Fig. 5 den schematischen Querschnitt durch eine Ausführungsform der erfindungsgemäßen Jalousieanordnung, mit geöffneten Lamellen,

Fig. 6 eine Darstellung ähnlich Fig. 5 , jedoch mit geschlossenen Lamellen,

Fig. 7 die Darstellung eines schematischen Querschnitts durch eine weitere Ausführungsform der erfindungsgemäßen Jalousieanordnung, mit geschlossenen Lamellen,

Fig. 8 den schematischen Schnitt durch eine Dachfläche, die von einer erfindungsgemäßen Jalousieanordnung gebildet ist, quer zu den Lamellen gesehen,

Fig. 9 die Endverbindung nebeneinanderliegender Lamellen, im Schrägbild und in Explosionsdarstellung,

Fig. 10 die Lageranordnung für die erfindungsgemäßen Lamellen, wobei 6a eine ungeteilte Lagerung,

6b ein Kunststofflager und

6c eine geteilte Lagerung darstellen,

Fig. 11 einen Querschnitt durch eine erfindungsgemäße Jalousieanordnung längs der Lamellen,

Fig. 12 die Ansicht einer erfindungsgemäßen Jalousieanordnung, und

Fig. 13 den Querschnitt durch eine weitere Lamelle.

In Fig. 1 ist ein erfindungsgemäßes Gebäude gezeigt, das als Anbau an ein anderes, größeres Gebäude ausgebildet ist. Dieser Anbau kann eine Schwimmhalle, ein Wintergarten, eine Loggia oder dergleichen sein.

Das Dach des Gebäudes weist Aluminiumschienen 3 auf, an deren Oberseite eine Dachdeckung aus Glas oder Acrylglas-Stegplatten angeordnet ist.

Unterhalb dieser Abdeckung sind Jalousieanordnungen 1 vorgesehen.

Dieser Dachaufbau ist in Fig. 2 näher gezeigt: wie ersichtlich, sind an der Unterseite der Aluminiumschienen 3 aufeinander ausgerichtete Kunststofflager 4 angeordnet. Zwischen benachbarten Kunststofflagern ist jeweils eine Lamelle 5 aus Aluminiumprofil angeordnet. Diese Lamelle 5 weist zwei Lamellenflügel und ein einstückig mit diesen ausgebildetes Mittelrohr 7 auf. Wie aus Fig. 3 ersichtlich, ist diese Anordnung aus seitlichen Flügeln 6 und Mittelrohr 7 zu den beiden Hauptachsen des Mittelrohres 7 symmetrisch.

In die Enden des Mittelrohres 7 sind Rohrstutzen 8 eingesetzt, welche ihrerseits schwenkbar in den Kunststofflagern 4 geführt sind.

Wie ersichtlich, sind durch die Rohrstutzen 8 mehrere Lamellen 5 hintereinander in Reihe angeschlossen. Man kann die Anordnung aber auch als eine einzige, durch mehrere Lagerstellen 4, 8 unterbrochene Einzellamelle 5 ansehen.

Der in der Zeichnung rechts liegende Rohrstutzen 8 ist auswärts verlängert und trägt ein Schneckenrad 9, welches durch eine Schneckenwelle 10 drehbar ist, die sich längs aller paralleler Lamellen 5 erstreckt, so daß durch die Drehung der Schneckenwelle 10 alle Schneckenräder 9 synchron drehbar sind.

Der durch das Schneckenrad 9 hindurch verlängerte Rohrstutzen 8 ist mittels eines flexiblen Schlauchanschlusses 11 an ein Zu-oder Ablaufrohr 12 angeschlossen.

Die Außenoberflächen der Lamellen 5 sind mattschwarz eloxiert und stehen mit der Raumluft in Verbindung.

Über das Zu-oder Ablaufrohr 12 kann die Kanalanordnung 7, 8 abgelassen werden oder kann wahlweise mit kaltem oder warmem Wasser beaufschlagt werden. Hierbei ergeben sich in Abhängigkeit von des Jahreszeiten die folgenden Betriebszustände:

a) <u>Übergangsjahreszeit:</u> (frühestes Frühjahr/Spätherbst) ohne Wasser wirken die Lamellen 5 wie ein Heizkörper. Der Sonne entgegengestellt heizen sich die Lamellen 5 auf und lassen Tageslicht ein. Die warmen Lamellen heizen den Innenraum auf Zimmertemperatur auf. Hierzu ist unter Umständen ein zusätzlicher Kleinlüfter manchmal erforderlich bzw. ratsam.

b) <u>wärmere Jahreszeit:</u> Bei zunehmender Sonne und höheren Temperaturen wird über das Zulaufrohr 12 ein Wasserdurchlauf eingeschaltet; da die Lamellen als Sonnenkollektor wirken, heizen sie z.B. Brauchwasser oder das Wasser eines Wärmetauscher-Umlaufes auf und gewinnen somit Energie von der Sonne; gleichzeitig wird Tageslicht in den Raum eingelassen, ohne daß blendende Sonnenstrahlen in den Innenraum einfallen. Durch entsprechende Steuerung der Lamellen kann auf Wunsch auch unter Inkaufnahme einer Verschlechterung des Kollektor-Wirkungsgrades Sonnenlicht in den Raum eingegelassen werden.

c) <u>Hochsommer:</u> Hier bieten die Lamellen nicht nur Sonnenschutz, sondern können gleichzeitig den Innenraum kühlen, indem man kaltes Wasser durch die Kanäle 7, 8 hindurchströmen läßt. Dieses Wasser, das gegebenenfalls mit höherem Durchsatz als im Falle des Kollektorbetriebes durch die Kanäle 7, 8 strömt, kann leicht erwärmt als Brauchwasser z.B. zum Betrieb von Gartenduschen oder als Schwimmbadbeheizung dienen oder kann über eine Wärmepumpe unter Nutzung der hierin enthaltenen Wärmeenergie wieder abgekühlt werden.

d) Im <u>Winter,</u> an sonnenlosen Tagen, verhindern die Lamellen, von Heizwasser durchflossen, das Absinken der Temperaturen. Auch in diesem Fall kann gegebenenfalls ein zusätzlicher Kleinlüfter zweckmäßig sein.

Die Breitseite der Lamellen 5 sollte zum Erreichen eines guten Wärmewirkungsgrades voll dem einfallenden Sonnenlicht zugewandt sein. Es kann aber natürlich je nach Wunsch und Bedürfnissen auch eine andere Stellung gewählt werden, und zwar vom vollen Sonnenlichteinfall bis zur vollständigen Abdunklung.

In Fig. 3 ist in vergrößertem Maßstab eine Lamelle 5 im Querschnitt dargestellt. Auf diese Lamelle 5 ist für den Einsatz im Freien eine Isolierung 13 aufgeschoben, die aus einem stranggepreßten Acrylglas-Hohlprofil gebildet ist. Diese Isolierung 13 weist eine Außenhülle 14 und Abstützstege 15 auf, welche auf der eigentlichen Lamelle 5 aufsitzen und die Halterung der Isolierung 13 auf dieser gewährleisten.

Ferner weist die Isolierung 13 beiderseits jeweils eine rinnenartige Verlängerung 16 auf, die beide einander entgegengerichtet sind. Auf diese Weise können benachbarte Lamellen 5 einander in ihrer Endstellung, in der sie aufeinander fluchtend ausgerichtet sind, mit den rinnenartigen Verlängerungen 16 der Isolierung 13 hintergreifen. Wenn die Achsen 7 der Lamellen 5 in oder im wesentlichen in Gefällerichtung verlaufen, dann bilden die einander hintergreifenden Verlängerungen 16 Ablaufrinnen, die wie bei Dachpfannen für den Ablauf des Wassers sorgen. Somit kann unmittelbar eine Dachfläche aus den Lamellen 5 gebildet werden, die je nach Witterung zur Belüftung des Innenraumes verschwenkt oder zum Regenschutz gegeneinandergelegt werden.

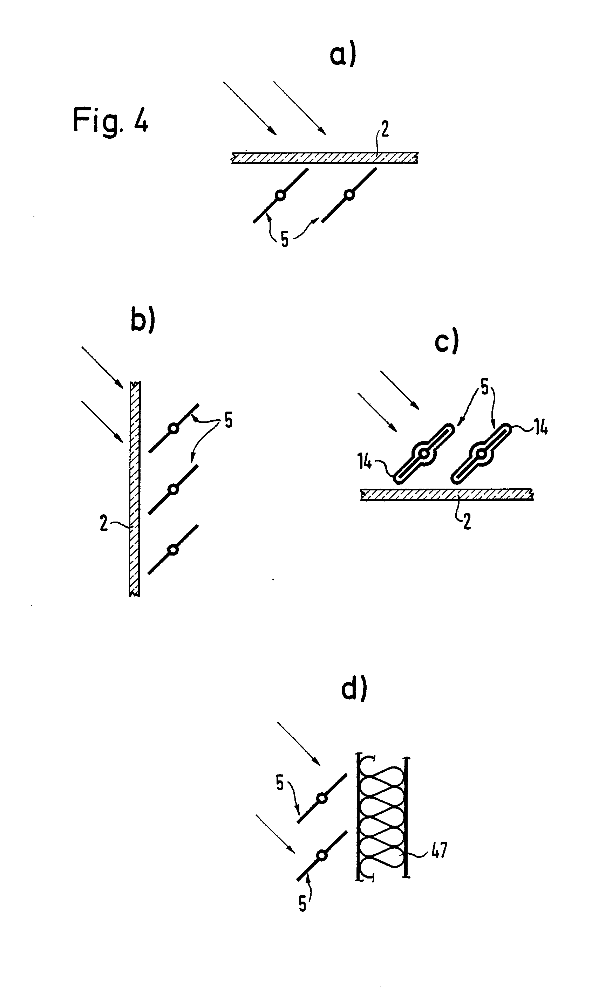

In Fig. 4 sind mehrere Anwendungsfälle für die gezeigte Jalousieanordnung gezeigt: hierbei zeigen die Pfeile jeweils die Einfallrichtung des Sonnenlichts an.

In der Ausführungsform der Fig. 4a sind die Lamellen 5 quer zum einfallenden Sonnenlicht ausgerichtet und unterhalb einer lichtdurchlässigen oder durchsichtigen Dachabdeckung angeordnet.

In Fig. 4b ist die gleiche Anordnung wie in Fig. 4a getroffen, jedoch hinter einer vertikalen, lichtdurchlässigen Wand.

In Fig. 4c sind die Lamellen 5 oberhalb und außerhalb einer Dachabdeckung 2 gezeigt, sind aber ihrerseits von einer Isolierung 14 umgeben.

Bei der Ausführungsform der Fig. 4d ist eine lichtundurchlässige Isolierwand 47 gezeigt, außerhalb deren die Lamellen 5 im Freien angeordnet sind.

Wenn eine Auskühlung des Raumes verhindert werden soll, z.B. im Winter, und wenn gleichzeitig kein nutzbares Sonnenlicht vorliegt, etwa nachts, dann ist es möglich, daß die Lamellen in eine gemeinsame Ebene verschwenkt werden, wobei sie sich einander mit an den Lamellen unmittelbar angeformten Verlängerungen oder mit den in Fig. 3 gezeigten Verlängerungen die Isolierung 13 hintergreifen und somit eine geschlossene Wand bilden, welche zwischen sich und der benachbarten durchsichtigen oder undurchsichtigen Wandfläche 2, 17 einen Wärmeisolierraum bildet.

Ein weiteres Ausführungsbeispiel einer Lamelle ist im Querschnitt in Fig. 3a gezeigt: Diese Lamelle ähnelt der in Fig. 3 gezeigten und weist beiderseits Ausbildungen 17 auf, mit welchen die Lamelle, die jeweils benachbarte Lamelle in geschlossenem Zustand der Jalousieanordnung hintergreifen kann. Diese Ausbildung 17 ist jedoch nicht, wie beim Gegenstand der Druckschrift 3, als Fortsatz der Isolierung 14 ausgebildet, sondern bildet einen Teil der beiden Flügel 6 der eigentlichen Lamelle 5.

Die in Fig. 3a gezeigte Lamelle ist maßstäblich dargestellt; d.h., der Innendurchmesser der Rohrleitung 7 beträgt etwa 9 mm, die mittlere Wandstärke beträgt etwa 4 mm, und die Gesamtbreite beträgt etwa 195 mm.

Bei den in den Fig. 3 und 3a gezeigten Lamellen ist, was die Auslegung des Antriebs 9, 10 angeht, dafür zu sorgen, daß die sich aneinanderlegenden Verlängerungen 16 der Lamellen 5 nicht zu kräftig gegeneinanderdrücken, so daß Schäden vermieden sind. Es ist daher im Schwenkbereich der Lamellen 5 oder am Antrieb 9, 10 ein Endschalter vorzusehen.

Der Antrieb 9, 10 muß im übrigen nicht als Schneckenantrieb ausgebildet sein, sondern kann z.B. auch als Hebelmechanismus ausgebildet sein.

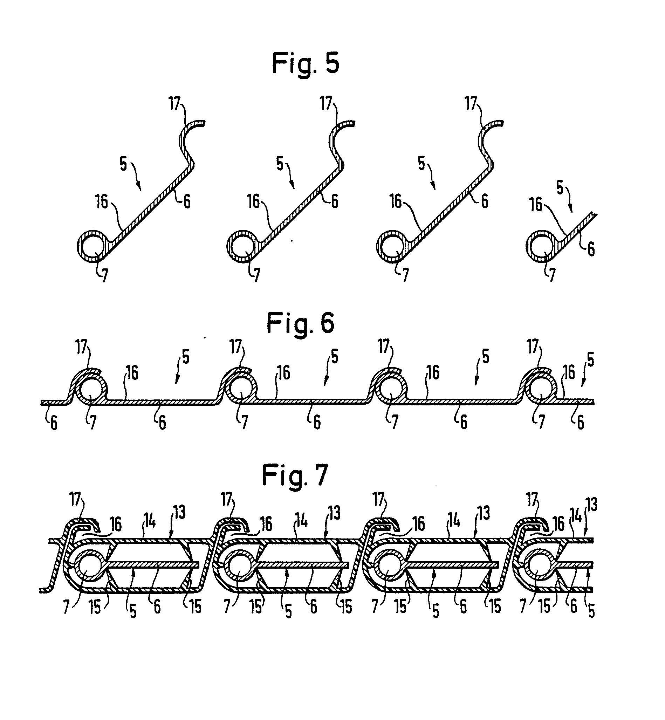

In Fig. 5 ist schematisch eine Jalousieanordnung gezeigt, die quer zu den Lamellen 5 geschnitten ist. Die gleiche Anordnung ist in Fig. 6 gezeigt, jedoch mit geschlosenen Lamellen, während in Fig. 5 die Lamellen in geöffneter Stellung gezeigt sind.

Die Lamellen weisen ein Rohr 7 auf, dessen Längsmitte die Schwenkachse für die Schwenkbewegung der Lamellen 5 bildet. An der Unterseite des Rohres ist tangential einseitig ein Lamellenflügel 6 angeordnet; am rechten, freien Ende ist dieser Lamellenflügel aufwärts und dann halbrund nach außen und unten gebogen. Die Lamelle 5 bildet somit eine Regenrinne 16.

Wie aus Fig. 6 ersichtlich, ist die freie, übergreifende Kante 17 des Lamellenflügels 6 so ausgebildet, daß sie auf dem Rohr 7 der benachbarten Lamelle 5 aufsitzt.

In Fig. 7 ist in geschlossener Lage ein anderes Ausführungsbeispiel einer Jalousieanordnung gezeigt, mit einer Lamelle 5, die wie die Ausführungsform der Fig. 5 ein Rohr 7 aufweist, dessen Längsmitte die Schwenkachse für die Lamellenflügel bildet. Mittig ist seitlich an diesem Rohr 7 ein Lamellenflügel 6 angesetzt, der sich wie eine ebene Leiste erstreckt.

Senkrecht zur seitlichen Ebene ist auf das so gezeigte Aluminium-Hohlprofil eine Isolierung 13 aufgeschoben, die bevorzugt aus Acrylglas gebildet ist und ein stranggepreßtes Hohlprofil bildet.

Die Außenhülle 14 umgibt die eigentliche Lamelle 5 mit Abstand; lediglich einige wenige Abstützstege 15 sind vorgesehen, über welche sich die Außenhülle 14 auf der Lamelle 5 abstützt.

Wie aus der Zeichnung ersichtlich, sind die Abstützstege 15 zur Lamelle 5 hin verjüngt ausgebildet, so daß ein verminderter Wärmeverlust über die Abstützstege 15 stattfinden kann.

An der Oberseite ist links in der Zeichnung und nahe dem Rohr 7 eine überstehende Leiste mit hakenartigem Querschnitt angeformt; es ist ersichtlich, daß, wenn die Lamellen der Ausführungsform der Fig.7 in die Lage der Fig. 5 geschwenkt sind, die letztgenannte Leiste mit hakenartigem Querschnitt dann gerade eine U-Profil-Rinne bildet, deren Boden etwa horizontal liegt und die als Regenrinne 16 ausgebildet ist.

Auf der anderen Seite ist die Isolierung 13 ebenfalls nach oben um eine Leiste verlängert, die eine freie, die benachbarte Regenrinnenbegrenzung 16 umgreifende Kante 17 bildet.

Die Regenrinne 16 wird so weit von der Kante 17 umgriffen, daß sie auch auf ihrer Außenseite nicht naß werden kann, so daß nach Verschwenken der gezeigten Jalousieanordnung in die offene Stellung von der Regenrinne 16 nichts in den darunterliegenden, offenen Raum abtropfen kann.

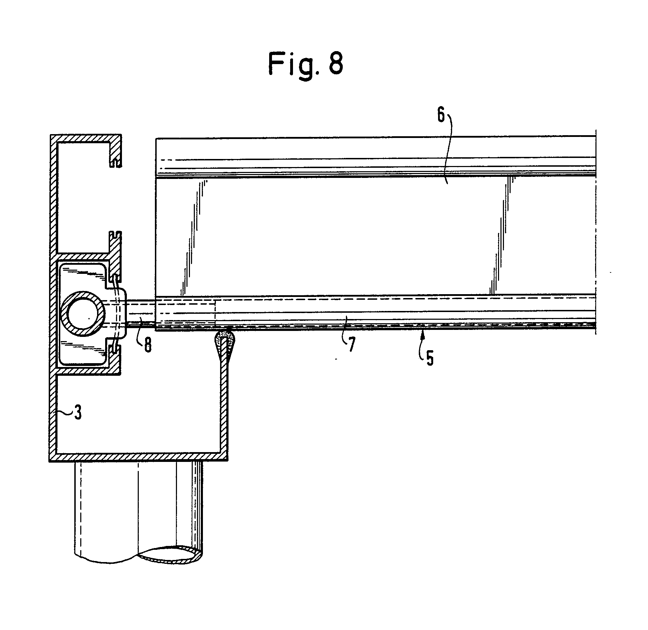

In Fig. 8 ist eine Hohlprofilschiene 3 gezeigt, die eine Endverbindungs-und Lageranordnung aufnimmt, die weiter unten noch näher beschrieben wird. In dieser Anordnung sind Lager-Rohrstutzen 8 eingesetzt, welche in das Rohr 7 der Lamelle 5 eingreifen und diese drehbar abstützen.

Unterhalb der Führungsschienenausbildung für diese Endleitungen ist eine Regenrinne in Form eines länglichen Kastens gebildet, mit einem nach unten weisenden Ablauf.

Die Regenrinne ist mit ihrer den Lamellen 5 zugewandten Flanke bis zur Unterseite dieser Lamellen hochgezogen, welche eine Ausbildung aufweisen, wie sie in den Fig. 5 und 6 gezeigt ist. Die hochgezogene Kante ist am freien Ende mit einer Dichtung versehen, die gegen die geschlossenen Lamellen anliegt und gleichzeitig dazu dient, die aus dem Gewicht der Lamellen 5 resultierende Last, welche auf eine Gleitringdichtung einwirkt, die zwischen dem Lager-Rohrstutzen 8 und dem Rohr 7 der Lamelle gebildet ist, zu verringern.

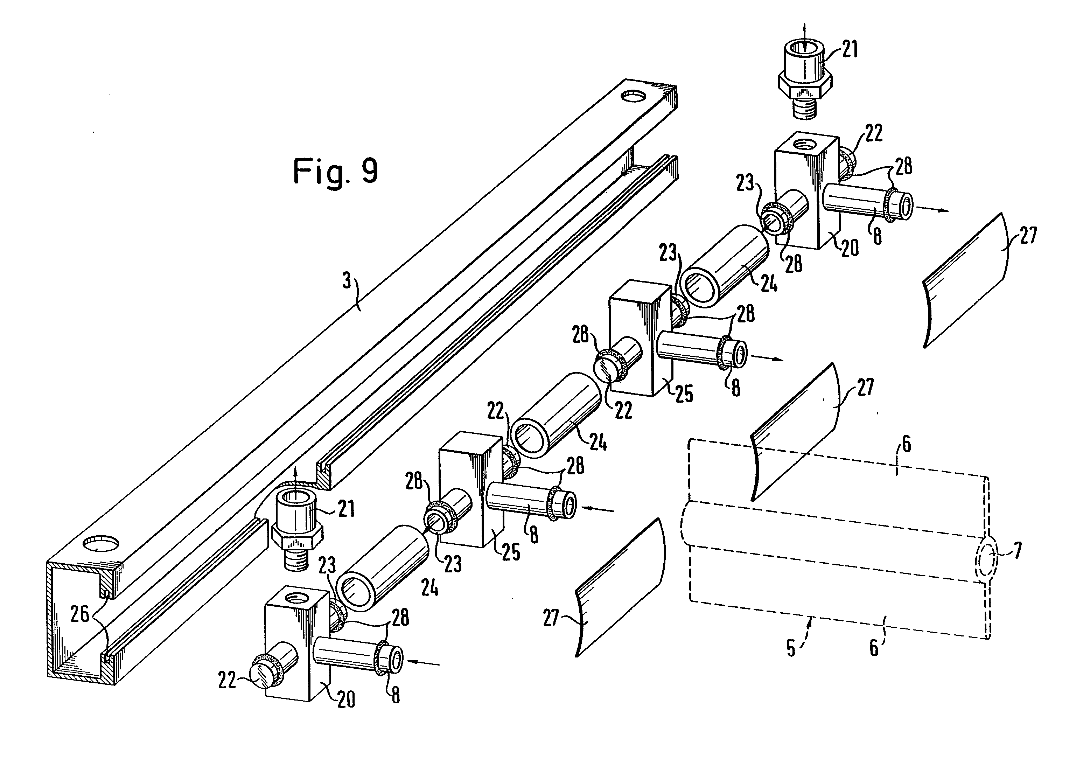

In Fig. 9 ist jener Teil der Montageschiene 3, der die Endverbindungen der Jalousieanordnung aufnimmt, noch näher schematisch gezeigt.

Diese Aluschiene 3' weist ein Rechteckprofil auf, dessen eine Längsseite über die ganze Länge des Profilstabes durch einen breiten Schlitz geöffnet ist.

Es ist somit ein rechteckiger, über einen Teil seiner einen Längsseite offener Raum gebildet, in welchen quaderförmige Baukörper ohne weiteres einschiebbar sind.

Diese Baukörper bestehen aus Endlagerblöcken 20, die an der Ober-bzw. Unterseite der Jalousieanordnung angebracht sind, und Zwischenlagerblöcke 25.

Jeder Endlagerblock wie auch die übrigen Zwischenlagerblöcke 25 weisen drei Bohrungen auf, die einen T-förmigen Kanal im Inneren des Blockes bilden.

Dieser Kanal wird in Richtung gegen die Lamellen 5 durch eine in den Zwischenlagerblock 25 eingesetzten Lager-Rohrstutzen 8 verlängert, der nahe seinem freien Ende eine Gleitringdichtung 28 trägt. Die Lamelle 5 ist mit ihrem Rohr 7 dichtend, aber verschwenkbar auf den Lager-Rohrstutzen 8 aufschiebbar.

Quer zu diesem letztgenannten Stutzen 8 und parallel zur Schiene 3 erstreckt sich eine Durchgangsbohrung durch die Blöcke 25, welche beiderseits einen Verbindungsstutzen bzw. Blindstutzen trägt.

Wenn ein Blindstutzen eingesetzt ist, dann erfolgt die Strömung zwingend zwischen dem Lager-Rohrstutzen 8 und dem Verbindungsstutzen 23, während der Blindstutzen 22 eine Abdichtung liefert.

Die einander benachbarten Verbindungsstutzen 23 bzw. Blindstutzen 22 sind durch einen übergeschobenen Rohrabschnitt miteinander verbunden, der etwa den gleichen Innendurchmesser wie das Rohr 7 aufweist und ebenfalls über Gleitringdichtungen 28 dichtend zwischen den beiden benachbarten Teilen befestigt ist.

Wie aus den eingezeichneten Pfeilen ersichtlich, kann durch geschicktes Einsetzen der Blindstutzen 22 der Strömungsverlauf den jeweils individuellen Anforderungen angepaßt werden.

Soweit einer der beiden einander zugewandten Stutzen ein Blindstutzen 22 ist, ist das Zwischenrohr lediglich als Abstandsrohr ausgebildet bzw. wirksam.

Es ist ohne weiteres ersichtlich, daß die gesamte Anordnung hintereinandergesteckt in die Aluschiene 3 eingeschoben werden kann. Anschließend wird nach Justierung der Lage aller Elemente jeder der beiden Endlagerblöcke durch eine Seitenwand der Schiene 3 hindurch mit einer Gewindebohrung versehen und von außen her durch einen Anschlußstutzen 21 festgeschraubt, so daß die gesamte Leitungsanordnung zwar fest, aber leicht löslich montiert ist.

Die beiden einander zugewandten Begrenzungsflanken für den Längsschlitz der Aluschiene 3 weisen jeweils einander zugewandt eine Rinne 26 auf, in welche Abdeckbleche 27 außen her eingeklemmt werden, um das Innere des Profils 3 nach außen hin abzuschließen.

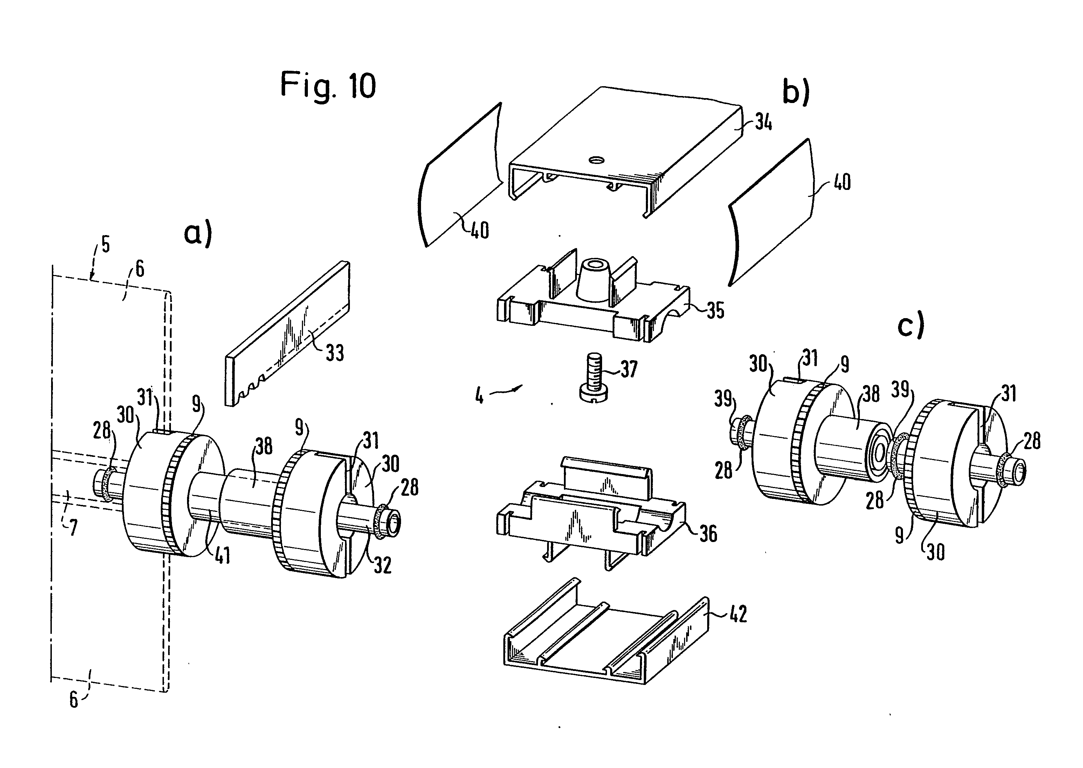

In Fig.10a ist schematisch eine Lamelle 5 angedeutet, die zwei einander gegenüberliegende Lamellenflügel 6 aufweist, die beiderseits an dem Rohr 7 angesetzt sind.

In das Innere des Rohres 7 ist mittels einer Gleitringdichtung 28 eine Hohlachse 32 eingeschoben. Auf der Hohlachse sitzt ein Endzylinder 30, der als Gußteil ausgebildet ist und eine mittige Durchgangsbohrung aufweist, welche zunächst von der Hohlachse 32 durchsetzt wird und dann zur Lamelle 5 hin aufgeweitet ist, so daß sie über die Außenseite des Rohres 7 paßt. Ferner weist die der Lamelle 5 zugewandte Seite des Endzylinders 30 einen Querschlitz auf, der so bemessen ist, daß er sich über die Lamellenflügel 6 schiebt. Der Endzylinder 30 ist somit drehfest mit der Lamelle 5 verbunden.

Die Hohlachse 32 erstreckt sich über den Endzylinder 30 noch über eine erhebliche Strecke hinaus und durchdringt eine Verbindungshülse 41 und einen zweiten Endzylinder 30, der zu der benachbarten, nicht dargestellten Lamelle gehört.

Die Verbindungshülse 41 ist etwa durch Schweißen fest mit den beiden Endzylindern 30 verbunden, so daß eine drehfeste Verbindung zwischen zwei benachbarten Lamellen hergestellt ist.

Über die Verbindungshülse 41 ist eine Aluminiuma-Gleithülse 38 geschoben, deren Axiallänge ein wenig kleiner ist als der halbe Abstand zwischen den beiden Endzylindern 30.

An der Außenseite eines jeden Endzylinders 30 ist einstückig ein Zahnring 9 geformt, der in Antriebsverbindung mit einer Zahnstange 33 bringbar ist, die schematisch angedeutet ist. Die Hin-und Herbewegung der Zahnstange 33 verdreht den zugehörigen Endzylinder und damit die zugehörigen Lamellen 5.

Wenn die beiden die Endverbindungen aufnehmenden, beiderseits der Jalousieanordnung angeordneten, in Fig. 9 näher gezeigten Profilschienen bereits fest montiert sind, dann ist es erforderlich, daß mindestens eine Verbindung zwischen zwei benachbarten Lamellen trennbar bzw. verkürzbar ist.

Eine solche Verbindung ist in Fig.10c. gezeigt.

Diese Verbindung stimmt im wesentlichen mit jener der Fig. 10a überein, mit der Ausnahme, daß anstelle einer durchgehenden Hohlachse 32 zwei Halbachsen 39 vorgesehen sind, die einander jedoch nicht berühren, sondern zwischeneinander in der Mitte zwischen den beiden Endzylindern 30 einen Abbstand freilassen. Dieser Abstand ist so bemessen, daß er das Ein-und Ausbauen der Lamellen gestattet.

Die einander zugewandten Enden der Halbachsen 39 tragen wie auch die voneinander abgewandten Enden dieser Achsen 39 jeweils eine Gleitringdichtung 28, die zwischen den beiden Endzylindern 30 mit der Innen oberfläche der Gleithülse aus Aluminium in Eingriff bringbar ist.

Est ist somit möglich, die hohlen Halbachsen 39 zwar verdrehbar, aber dichtend miteinander zu verbinden.

In Fig. 10b ist eine Lagerung gezeigt, in welcher die in Fig. 10a und 10c gezeigten Anordnungen aufnehmbar und drehbar abstützbar sind.

Die in Fig. 10 gezeigte Einbaulage entspricht jener, die die Jalousieanordnung einnimmt, wenn sie eine Dachfläche bildet.

Es ist ein oberes Abdeckprofil 34 gezeigt, das die Form eines flachen, umgekehrten U aufweist und innerhalb der beiden größeren, abwärts weisenden Schenkel zwei kleinere, ebenfalls abwärts weisende Schenkel aufweist, die an ihren unteren Kanten aufeinander zu stollenartig verdickt sind.

Ein oberes Halblager 35 aus Kunststoffguß weist seinerseits nach oben weisende Raststege auf, die mit der Stollenanordnung des oberen Abdeckprofils 34 verrastbar sind.

Um eine lagegetreue Halterung zu gewährleisten, ist ferner das obere Halblager 35 mittels einer Schraube 37 mit einer Gewindebohrung im oberen Abdeckprofil 34 verschraubt.

Ein unteres Halblager 36 weist seinerseits nach oben stehende Rastschenkel auf, mittels welcher es mit dem oberen Halblager 35 verrastbar ist.

In den einander benachbarten Flächen von oberem Halblager 35 und unterem Halblager 36 ist beiderseits, in Querrichtung zum oberen Abdeckprofil 34 gesehen, eine Lagerfläche für die Verbindungshülse 41 bzw. die Hohlachse 32 bzw. die Halbachsen 39 gebildet, wo diese drehbar aufgenommen werden. Zwischen den beiden Lagerstellen ist eine Lagerstelle mit größerem Durchmesser ausgebildet, welche zur Aufnahme der Gleithülse 38 eingerichtet ist.

Die Halblager 35, 36 sind aus einem Kunststoff gebildet, der gegenüber dem Aluminium der Hülsen bzw. Achsen 41 bzw. 32, 39 eine besonders niedrige Reibungszahl hat.

Infolge des leichten Gewichtes der Lamellen 5 ist es möglich, deren Gewicht allein durch die rastende Verbindung zwischen oberem und unterem Halblager 35, 36 aufzunehmen.

Auf das untere Halblager 36 ist von unten her ein unteres Abdeckprofil 42 aufgeklemmt, welches parallel zum oberen Abdeckprofil 34 verläuft.

Zwischen diesen beiden Profilen sind die Abstände zwischen benachbarten Kunststofflagern 4, die aus den Halblagern 35, 36 gebildet sind, durch seitliche Abdeckbleche 40 abgedeckt, welche in rillenartigen Einschnitten in dem oberen Halblager 35 und dem unteren Halblager 36 sitzen.

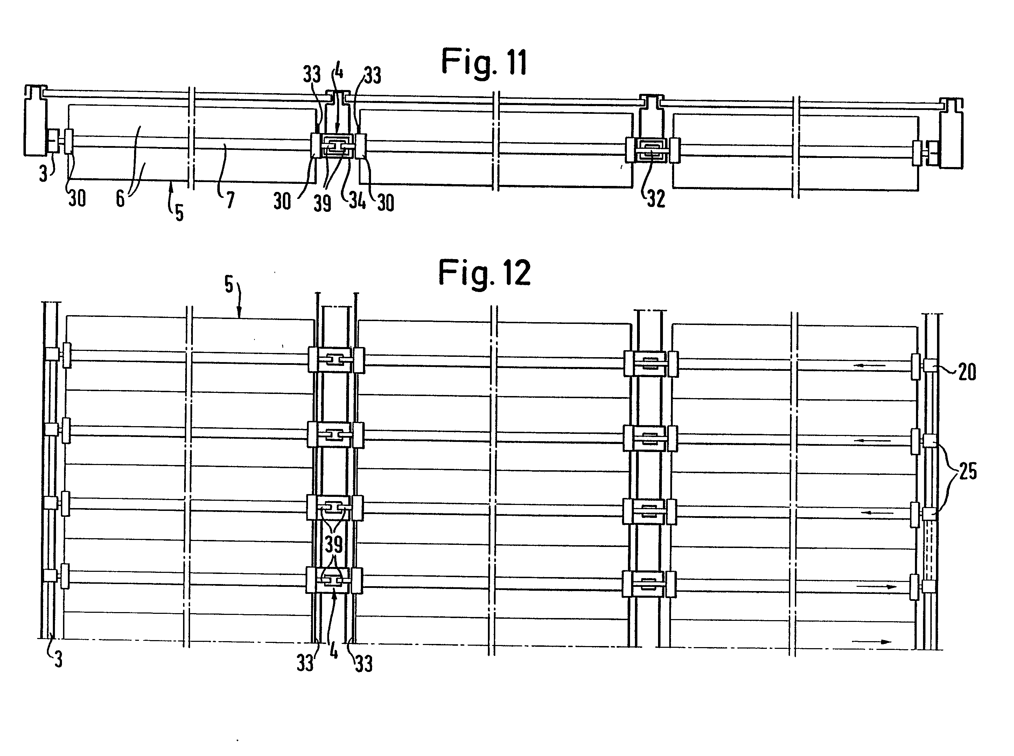

In Fig.12 ist schematisch der Querschnitt durch eine unterhalb eines Oberlichts liegende Jalousieanordnung gezeigt, senkrecht zu den Lamellen gesehen: es ist eine Reihe von jeweils drei hintereinanderliegenden Lamellen 6 angeordnet, welche beiderseits drehbar auf einem Lagerrohrstutzen 8 (sh. Fig. 9) gelagert sind und untereinander durch eine geteilte Lagerung (links) bzw. ungeteilte Lagerung (rechts) verbunden sind.

Beiderseits der geteilten Lagerung sind zwei Zahnstangen 33 eingezeichnet, da diese geteilte Lagerung keine Drehverbindung zwischen den beiden benachbarten Endzylindern 30 herstellt, im Gegensatz zur rechten, ungeteilten Lagerung.

In Fig. 12 ist die Frontansicht der in Fig. 11 gezeigten Jalousieanordnung gezeigt: durch Pfeile ist die Strömungsrichtung des Wärmeaustauschmittels in den einzelnen Lamellen dargestellt.

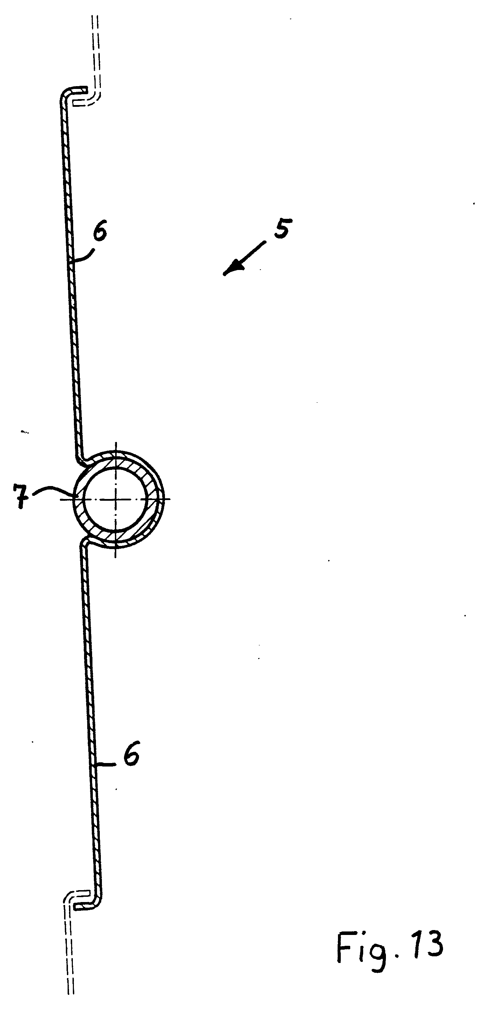

Fig. 13 zeigt eine weitere Ausführungsform einer Lamelle im Querschnitt.

17

Diese Lamelle ist von einem gesonderten Mittelrohr 7 gebildet, das von einem Streifen aus Aluminiumblech umschlungen ist, das sich in Längsrichtung des Mittelrohres 7 erstreckt. Die Umschlingung erfolgt so, daß das Aluminiumblech über einen Winkelbereich von etwa 270° flächig gegen das Mittelrohr 7 anliegt und dann beiderseits jeweils um den gleichen Winkel umgebogen ist, so daß zwei Lamellenflügel 6 entstehen, welche in einer gemeinsamen Ebene liegen und an ihren Enden Ausbildungen tragen, die jenen der bereits früher beschriebenen Lamellen entsprechen.

Der Umschlingungswinkel ist auf die Dicke des Aluminiumbleches und die Wandstärke des Mittelrohres so abgestimmt, daß die beiden Lamellenflügel 6 eine durchgehende Fläche bilden, welche nur von einem mittigen Längsstreifen unterbrochen ist, in welchem das Mittelrohr 7 angeordnet ist, das mit seiner Außenwand gerade noch an die genannte Fläche heranrührt. Auf diese Weise ist eine nur flache Vertiefung geschaffen, in der sich bei Verwendung der gezeigten Lamelle als Außenlamelle, die den Witterungseinflüssen ausgesetzt ist,nur verhältnismäßig wenig Schmutz und dergleichen absetzen kann. Es kann sich auch nur allenfalls wenig Regenwasser in dieser Vertiefung sammeln, so daß nicht die Gefahr besteht, daß eine erhebliche Wassermenge abfließt, wenn nach längerem Regen die horizontale Lamelle in eine Schräglage verschwenkt wird.

Da somit ein Teil des Mittelrohres unmittelbar der Sonneneinstrahlung ausgesetzt ist, ist es zweckmäßig, die Außenoberfläche des Mittelrohres mindestens in diesem Bereich zu schwärzen.

Es ist grundsätzlich aber auch möglich, die gezeigte Lamelle in umgekehrter Lage zu montieren, wobei der Blechstreifen die durchgehende, ununterbrochene Außenoberfläche der Lamelle bildet. Zur Vermeidung der genannten Störungsmöglichkeiten wäre es jedoch dann gegebenenfalls zweckmäßig, den Umschlingungswinkel zu verringern auf eine Größe, die nur wenig über 180° liegt. Diese Anordnung ist etwa dort vorteilhaft, wo häufig mit stark saurem Regen zu rechnen ist, also etwa in Industriegebieten Hierdurch wird verhindert, daß das schwachsaure Regenwasser sich wegen seiner korrodierenden Wirkung in den Spalt zwischen Blechstreifen und Mittelrohr hineinfrißt und dort die Wärmeleitung verschlechtert. Um Wasseransammlungen zu vermeiden, können die Lamellen mit ihren Mittelrohren gegenüber der Horizontalen leicht geneigt angebracht werden.

Die Breite der Lamellenflügel 6 ist auf deren Dicke so abgestimmt, daß die Wärmeleitung mindestens überwiegend im Lamellenmaterial zum Mittelrohr hin erfolgt und die Abstrahlungsverluste demgegenüber verhältnismäßig gering sind.

**Ansprüche**

1. Jalousieanordnung in mehreren, schwenkbar gelagerten und bevorzugt gemeinsam oder gruppenweise schwenkbaren Lamellen, wobei
-mindestens eine der beiden Oberflächen der Lamellen als Sonnenlichtenergie absorbierende Fläche ausgebildet ist,
-die Lamellen mindestens einen mit der absorbierenden Fläche in wärmeleitender Verbindung stehenden Strömungsmittelkanal aufweisen, und
-die Strömungsmittelkanäle an einen Strömungsmittelumlauf angeschlossen sind, dadurch **gekennzeichnet,** daß die Lamellen (5) aus einem Profilstab aus Metall, bevorzugt Aluminium, bestehen, der ein durchgehendes, in der Schwenkachse der Lamelle liegendes Mittelrohr (7) aufweist, an das eine als Sonnenlichtkollektorfläche ausgebildete Lamellenflügelanordnung angesetzt ist, die bevorzugt als je ein beiderseits des Mittelrohres (7) angeordneter Lamellenflügel (6) ausgebildet ist.

2. Jalousieanordnung nach Anspruch 1, dadurch gekennzeichnet, daß der die Lamellen (5) bildende Profilstab einstückig ausgebildet ist.

3. Jalousieanordnung nach Anspruch 1, dadurch gekennzeichnet, daß der Profilstab zweistückig ausgebildet ist, wobei das Mittelrohr (7) gesondert ausgebildet ist und die Lamellenflügelanordnung aus einem durchgehenden Flügelkörper gebildet ist, der das Mittelrohr (7) mindestens zum Teil umschlingt, wärmeübertragend mit diesem verbunden ist und mit einem oder zwei abstehenden Seitenstreifen den oder die Lamellenflügel (6) bildet.

4. Jalousieanordnung nach Anspruch 3, dadurch gekennzeichnet, daß der Flügelkörper das Mittelrohr (7) über einen Winkelbereich von mehr als 180° umschlingt und gegen dieses mindestens spielfrei, vorzugsweise unter Vorspannung, anliegt.

5. Jalousieanordnung nach einem der Ansprüche 1 bis 4, dadurch gekennzeichnet, daß jede der Lamellen (5) beiderseits einen deren Drehachse bildenden Strömungsmittel-Anschlußstutzen (8) aufweist, der in das Mittelrohr (7) einmündet oder von diesem gebildet ist.

6. Jalousieanordnung nach einem der Ansprüche 1 bis 5, dadurch **gekennzeichnet,** daß die Lamellen (5) einzeln oder gruppenweise parallel zueinander an den Strömungsmittelumlauf (12) angeschlossen sind.

7. Jalousieanordnung nach einem der Ansprüche 1 bis 6, mit einem Stellantrieb zum gemeinsamen Verstellen der Lamellen, dadurch **gekennzeichnet,** daß der Stellantrieb (9, 10) eine Zeitsteuerung aufweist, um die Lamellen (5) mit ihrer absorbierenden Fläche quer zur Einfallsrichtung des Sonnenlichts einzustellen.

8. Jalousieanordnung nach einem der Ansprüche 1 bis 7, dadurch **gekennzeichnet,** daß die Lamellen jeweils von einer wärmeisolierenden Außenabdeckung (13) umgeben sind, die den Lichteintritt zur absorbierenden Fläche gestattet.

9. Jalousieanordnung nach einem der Ansprüche 1 bis 8, dadurch **gekennzeichnet,** daß die aneinander angrenzenden Kanten der Lamellen (5) oder der Außenabdeckungen (13) in gegenseitigen regendichten Eingriff bringbare Ausbildungen (16) aufweisen.

10. Jalousieanordnung nach einem der Ansprüche 5 bis 9, dadurch **gekennzeichnet,** daß die Strömungsmittel-Anschlußstutzen (8) benachbarter Lamellen (5) mit Dehnungs-Ausgleichskupplungen verbunden sind.

11. Jalousieanordnung nach einem der Ansprüche 1 bis **10,**
dadurch **gekennzeichnet,** daß der Aluminium-Profilstab eine im wesentlichen durchgehend gleichmäßige Wandstärke aufweist.

12. Jalousieanordnung nach Anspruch 11, dadurch gekennzeichnet, daß die Lamellenflügelanordnung aus nur einem, seitlich am Rohr (7) angeformten Lamellenflügel (6) gebildet ist.

13. Jalousieanordnung nach Anspruch 12, wobei die Lamelle eine zusätzliche, auf den Aluminium-Profilstab aufgeschobene, mindestens zum Teil durchsichtige Isolierung bevorzugt aus Acrylglas aufweist, die eine Außenhülle aufweist, die über Abstützleisten mit Abstand am Aluminium-Profilstab aufsitzt,
dadurch gekennzeichnet, daß die Isolierung (13) einen geschlossenen Hohlquerschnitt aufweist und in Längsrichtung des Aluminium-Profilstabes über diesen übergeschoben ist.

14. Jalousieanordnung nach Anspruch 13, dadurch gekennzeichnet, daß die eine der beiden, der Lamellenflügelanordnung (6) gegenüberliegenden Wände der Außenhülle (14) lichtreflektierend ausgebildet, eingefärbt, beschichtet oder hinterlegt ist.

15. Jalousieanordnung nach einem der Ansprüche 12 bis 14 ,dadurch gekennzeichnet, daß die der Sonne zugewandte FLäche des Lamellenflügels (6) bzw. der Außenhülle (14) als Boden einer rinnenartigen Vertiefung ausgebildet ist.

16. Jalousieanordnung nach Anspruch 15, dadurch gekennzeichnet, daß die rinnenartige Vertiefung, deren Boden der Lamellenflügel (6) bildet, auf der einen Längsseite vom Rohr (7) und auf der anderen Längsseite von der gegenüber dem Boden abgewinkelten Längskante des Lamellenflügels (6) begrenzt ist, wobei bevorzugt der Boden tangential an die Rohrwandung angesetzt ist.

17. Jalousieanordnung nach Anspruch 16, dadurch gekennzeichnet, daß der Querschnitt der freien Längskante (17) des Lamellenflügels (6) bogenförmig so gewölbt ist, daß diese Wölbung passend auf einen Teil des Rohres (7) einer benachbarten Lamelle (5) aufsetzbar ist.

18. Jalousieanordnung nach Anspruch 15, dadurch gekennzeichnet, daß an jenem Teil der Außenhülle (13), der den über dem Rohr (7) liegenden Rand des Bodens der rinnenartigen Vertiefung bildet, ein diese zur einen Seite hin begrenzender Steg angeformt ist, dessen freie Kante etwa parallel zum Boden umgebogen ist, und daß die andere Seite des Bodens von einem zweiten Steg begrenzt ist, dessen freie Kante so umgebogen ist, daß sie den ersten Steg einer benachbarten Lamelle (5) umgibt.

19. Jalousieanordnung nach einem der Ansprüche 11 bis 15 , dadurch geknenzeichnet, daß beiderseits paralleler Lamellen (5) oder Reihen fluchtender Lamellen jeweils eine Endleitungsanordnung ausgebildet ist, die aus ineinander zusammensetzbaren, vorzugsweise zusammensteckbaren Einzelelementen gebildet ist.

20. Jalousieanordnung nach Anspruch 19, dadurch gekennzeichnet, daß die Endleitungsanordnung eine einseitig offene Montage-Hohlprofilschiene (3) aufweist, in welche Verteilerblöcke (20, 25) eingeschoben sind, in welche Lager-Rohrstutzen (8) und Anschlußstutzen (29), Verbindungsstutzen (23) bzw. Blindstutzen (22) eingesetzt sind, wobei die Rohre .(7) der Lamellen (5) dichtend (Gleitringdichtung 28) auf die Lager-Rohrstutzen (8) aufgesetzt sind und die einander zugewandten Verbindungsstutzen (23) oder Blindstutzen (22) benachbarter Verteilerblöcke (20, 25) durch vorzugsweise aufgesteckte Zwischenrohre bzw. Abstandsrohre (24) miteinander ver bunden sind.

21. Jalousieanordnung nach Anspruch 20, dadurch gekennzeichnet, daß die in Endblöcke (20) der Verteilerblöcke (20, 25) einmündenden Anschlußstutzen (21) eine Wand der Montage-Hohlprofilschiene durchdringen und somit die gesamte Anordnung in dieser fixieren.

22. Jalousieanordnung nach einem der Ansprüche 20 oder 21, dadurch gekennzeichnet, daß die Montage-Hohlprofilschiene einen Längsschlitz aufweist, in dessen beiden Rändern einander zugewandte Rillen ausgebildet sind, und daß den Zwischenraum zwischen benachbarten Lager-Rohrstutzen (8) überbrückende Abdeckbleche (27) mit ihren Längsrändern in den Rillen sitzen.

23. Jalousieanordnung nach einem der Ansprüche 11 bis 22, dadurch gekennzeichnet, daß am Ende jeder Lamelle (5) zu ihrem Schwenkantrieb ein Endzylinder (30) angebracht ist, der von einer Hohlachse (32, 39) durchdrungen ist, die dichtend (Gleitringdichtung 28) in das Ende des Rohres (7) eingeschoben ist, und der mit einer Ausstülpung (31), vorzugsweise einer Aussparung, den Lamellenflügel (6) formschlüssig umgreift.

24. Jalousieanordnung nach Anspruch 23, dadurch gekennzeichnet, daß ein Zahnkranz (9) formschlüssig mit dem Endzylinder (30) verbunden und bevorzugt einstückig mit diesem ausgebildet ist.

25. Jalousieanordnung nach einem der Ansprüche 23 oder 24, dadurch gekennzeichnet, daß die aneinander angrenzenden Endzylinder (30) zweier benachbarter, miteinander fluchtender Lamellen (5) drehfest miteinander verbunden sind.

26. Jalousieanordnung nach Anspruch 25, gekennzeichnet durch eine zwischen den Endzylindern (30) angeordnete, verschiebliche Gleithülse (38).

27. Jalousieanordnung nach einem der Ansprüche 23 oder 24, dadurch gekennzeichnet, daß die Hohlachse zweier aneinander angrenzender Endzylinder (30) zweier benachbarter, miteinander fluchtender Lamellen (5) als zwei Halbachsen (39) ausgebildet ist, zwischen denen ein Zwischenraum gebildet ist, und daß eine Gleithülse (38) über den Zwischenraum schiebbar angeordnete und mit dem Anschlußstutzen in dichtenden Eingriff (Gleitringdichtung 28) bringbar ist.

28. Jalousieanordnung nach einem der Ansprüche 26 oder 27, gekennzeichnet durch ein Kunststoff-Gleitlager (4) aus zwei Lagerschalen (35, 36), die zur drehbaren Lagerung der Hohlachse (32) oder der Halbachsen (39) ausgebildet sind.

29. Jalousieanordnung nach Anspruch 28, dadurch gekennzeichnet, daß jede Lagerschale (35, 36) zwei Lagerflächen aufweist, die von einer Vertiefung zur Aufnahme der Gleithülse (38) voneinander getrennt sind.

30. Jalousieanordnung nach einem der Ansprüche 28 oder 29, gekennzeichnet durch eine tragende Profilleiste (34), in welche eine (35) der Lagerschalen einrastbar und/oder hiermit verschwenkbar (37) ist, auf welche die zweite Lagerschale (36) nach Einschieben der Lamelle (5) aufrastbar ist.

31. Jalousieanordnung nach Anspruch 30, gekennzeichnet durch eine auf die zweite Lagerschale (36) aufrastbare Abdeckprofilschiene (42).

32. Jalousieanordnung nach einem der Ansprüche 28 bis 31, dadurch gekennzeichnet, daß die beiden Lagerschalen (35, 36) baugleich sind.

33. Jalousieanordnung nach einem der Ansprüche 31 oder 32, dadurch gekennzeichnet, daß zwischen den benachbarten Kunststofflagern (4) eine Profilleiste (34) sowie zwischen dieser und der Abdeckprofilschiene (22) seitliche Abdeckbleche (40) angeordnet sind.

34. Jalousieanordnung nach einem ihrer Ansprüche 20 bis 33, dadurch gekennzeichnet, daß alle Gleitringdichtungen (28) und bevorzugt auch alle Endzylinder (30) baugleich sind.

35. Dachfläche aus einer geneigten Jalousieanordnung nach einem der Ansprüche 11 bis 34.

36. Dachfläche nach Anspruch 35, dadurch gekennzeichnet, daß die Lamellen (5) längs der Fallinie der Dachfläche verlaufen (Fig. 8).

37. Bausatz zur Herstellung einer Jalousieanordnung nach einem der Ansprüche 23 bis 36.

38. Gebäude mit mindestens einer für Sonnenlicht durchlässigen Wand-und/oder Dachfäche, hinter der im Inneren des Gebäudes die Jalousieanordnung nach einem der Ansprüche 1 bis 34 mit geringem Abstand angebracht ist, dadurch **gekennzeichnet,** daß der Strömungsmittelumlauf wahlweise an eine Kühlmittel-oder Heizmittelversorgung anschließbar ist.

39. Gebäude nach Anspruch 38, **gekennzeichnet** durch eine bevorzugt von der Temperatur der Wand-oder Dachfläche abhängigen Temperaturfühleranordnung zum Ansteuern des Anschlusses des Strömungsmittelkreislaufes (12) an die Kühl-oder Heizmittelversorgung.

Fig. 1

Fig. 2

## Fig. 3

## Fig. 3a

0 249 919

**Fig. 4**

**a)**

2

5

**b)**

5

2

**c)**

5

14

14

2

**d)**

5

5

47

## Fig. 5

## Fig. 6

## Fig. 7

# Fig. 8

Fig. 9

Fig. 10

Fig. 11

Fig. 12

0 249 919

Fig. 13